# FASCICULE DE BREVET EUROPEEN

(11) **EP 2 619 937 B1**
(45) Date de publication et mention de la délivrance du brevet: **06.09.2017**
(21) Numéro de dépôt: 10759875.7
(22) Date de dépôt: 24.09.2010
(51) Int. Cl.: H04L 5/00

(54) **ALLOCATION DE RESSOURCES RADIO DANS UNE STATION DE BASE D'UN RÉSEAU À LARGE BANDE**
ZUWEISUNG VON FUNKRESSOURCEN BEI EINER BASISSTATION EINES BREITBANDNETZES
ALLOCATION OF RADIO RESOURCES IN A BASE STATION OF A BROADBAND NETWORK

(43) Date de publication de la demande: 31.07.2013
(73) Titulaire: Airbus DS SAS, 78990 Elancourt (FR)
(72) Inventeur: PISON, Laurent, F-78760 Jouars Ponchartrain (FR); PATEROUR, Olivier, F-78280 Guyancourt (FR)
(74) Mandataire: Cabinet Camus Lebkiri
(86) Numéro de dépôt international: PCT/EP2010/064195
(87) Numéro de publication internationale: WO 2012/037987

(56) Documents cités:
- WO-A1-2010/087334
- WO-A2-2010/076773
- US-A1- 2009 296 835

## Description

La présente invention concerne l'allocation de ressources dans une station de base d'un réseau de radiocommunication qui communique avec des terminaux mobiles à travers des ressources radio partagées dans une large bande de fréquence et pendant des trames radio.

Le réseau à large bande peut être basé sur la technologie LTE ("Long Term Evolution" en anglais) ou la technologie WiMAX mobile ("Worldwide interoperability for Microwave Access" en anglais) et supporté des liens radio avec les terminaux mobiles du type à accès multiple à multiplexage de fréquences orthogonales OFDMA ("Orthogonal Frequency Division Multiple Access" en anglais) et du type à accès multiple à multiplexage de fréquences à unique porteuse SC-FDMA ("Single Carrier Frequency Division Multiple Access" en anglais).

Les ressources radio de trafic offertes à la fois dans le domaine fréquentiel et le domaine temporel sont limitées par les trames configurées dans une station de base d'un tel réseau de type grand public et sont partagées de manière variable entre des liens radio actifs avec les terminaux mobiles sous la couverture de la station de base. Les qualités de service notamment en termes de débit sont variables en fonction des divers types de communications avec les terminaux mobiles. La station de base doit s'adapter dynamiquement en permanence aux caractéristiques des services offerts aux terminaux mobiles et demandés par ceux-ci. Lorsqu'une application dans la station de base ou dans un terminal mobile requiert des ressources radio, la station lui alloue des ressources sélectionnées parmi les ressources disponibles dans les trames en tentant de satisfaire la quantité de ressources requises. La station de base modifie alors périodiquement dans les trames l'allocation des ressources aux communications avec les terminaux mobiles en fonction de leurs besoins en ressources. La position en fréquence et en temps des ressources allouées à un lien avec un terminal mobile dans une trame radio descendante ou montante n'est pas figée et peut changer d'une trame à la suivante. Par exemple, des ressources s'étalant sur quelques sous-porteuses dans une bande étroite et quelques périodes de symboles consécutives définissant un bloc de ressources ayant une position déterminée dans une trame sont allouées à un terminal dans une trame et sont allouées à un autre terminal dans une trame ultérieure. Selon un autre exemple, la station de base alloue à un terminal un bloc de ressources dans une trame et un bloc de ressources ayant une position différente du précédent dans une trame ultérieure. Par conséquent, un bloc de ressources ayant une position déterminée dans une trame peut être alloué a priori à n'importe lequel des terminaux mobiles.

En outre, bien que la bande de fréquence soit large, les ressources dans une trame sont limitées et la station de base est parfois incapable d'accéder à toutes les demandes de communication avec les terminaux mobiles ou à toutes les qualités de service des communications.

Par ailleurs, il est connu d'utiliser pour des services de mission critique de sécurité publique un réseau de radiocommunications terrestre privé professionnel à bande étroite PMR ("Professional Mobile Radio" en anglais) par exemple du type DMR (("Digital Mobile Radio" en anglais), TETRA "Terrestrial Trunked Radio" en anglais) ou P25 avec des interfaces radio cellulaires numériques basées notamment sur le protocole IP ("Internet Protocol" en anglais). Il est aussi connu de réunir les terminaux fixes et mobiles par groupes dans le réseau privé professionnel afin que tout terminal membre d'un groupe puisse transmettre des données de voix, ou parfois de brefs messages à des débits plus élevés, aux autres terminaux membres du groupe à travers l'infrastructure du réseau et recevoir les données de n'importe quel autre terminal appartenant au groupe à travers l'infrastructure du réseau. Les terminaux fixes et mobiles d'un groupe ne peuvent communiquer qu'entre eux. Le partage des ressources radio ("trunking" en anglais) dans une station de base du réseau privé professionnel est réalisé sous forme de canaux dont le nombre et les débits sont déterminés pour satisfaire en toute sécurité les besoins en ressources de communication et en couverture radio des terminaux mobiles.

Les contraintes d'utilisation du réseau privé professionnel, comme l'assurance d'établir rapidement toutes les communications nécessaires au déploiement d'un groupe de terminaux pour que tous les membres de ce groupe puissent communiquer en permanence entre eux des données notamment de voix, ne sont pas compatibles avec l'allocation variable et dynamique, et donc incertaine, des ressources radio offertes par une station de base dans un réseau à large bande de type grand public, et avec la réinitialisation de l'allocation de l'ordre de la milliseconde, soit toutes les trames, soit toutes des sous-trames de chaque trame, dans la station de base. Le document EP1809064 décrit un procédé d'allocation statique pour certains terminaux et dynamiques pour d'autres en classant les terminaux selon leur besoin et selon leur capacité à fonctionner en dynamique et/ou en statique.

L'invention vise à surmonter cette incompatibilité en faisant bénéficier l'infrastructure radio d'un réseau à large bande à des terminaux mobiles professionnels pour que ces derniers soient utilisés pour une mission critique de sécurité publique comme dans un réseau privé professionnel à bande étroite.

A cette fin, un procédé dans une station de base pour allouer des blocs de ressources radio à des terminaux mobiles dans des trames descendantes émises par la station de base et dans des trames montantes reçues des terminaux mobiles, les blocs de ressources étant répartis en temps et en fréquence dans les trames, est caractérisé en ce qu'il comprend
une configuration de chaque trame descendante en des première et deuxième zones réservées pour des données respectivement à émettre vers des premiers et deuxièmes terminaux mobiles et de chaque trame montante en des première et deuxième zones réservées pour des données respectivement à recevoir des premiers et deuxièmes terminaux,
une allocation de blocs de ressources dans les premières zones des trames descendantes et montantes partagée entre des données à émettre vers et recevoir des premiers terminaux mobiles, les positions d'un bloc de ressources alloué à des données à émettre vers un premier terminal et d'un bloc de ressources alloué à des données à recevoir du premier terminal étant variables dans les premières zones,
une allocation d'au moins un bloc de ressources ayant une position prédéterminée dans les deuxièmes zones des trames descendantes en priorité à des données à émettre vers tous les deuxièmes terminaux mobiles, et
une allocation d'au moins un bloc de ressources ayant une position prédéterminée dans les deuxièmes zones des trames montantes en priorité à des données à recevoir de l'un des deuxièmes terminaux mobiles.

La station de base est incorporée à un réseau de radiocommunication à large bande dans lequel les premiers terminaux mobiles sont destinés pour la plupart à des usagers du public. Les blocs de ressources dans les premières zones des trames descendantes et montantes sont alloués de manière variable et incertaine comme dans un réseau large bande connu. En revanche, les deuxièmes terminaux mobiles sont des terminaux privés professionnels et peuvent constituer au moins un groupe pour une mission critique de sécurité publique. La réservation d'office de blocs de ressources dans les deuxièmes zones des trames descendantes et montantes en fonction des besoins en ressources de communication radio de tous les deuxièmes terminaux mobiles et l'allocation prioritaire de blocs de ressources ayant des positions prédéterminées dans les deuxièmes zones en priorité à des données de trafic à émettre vers les deuxièmes terminaux mobiles et à recevoir des deuxièmes terminaux mobiles assurent la rapidité d'établissement des communications entre les deuxièmes terminaux mobiles et le maintien de ces communications. Les blocs de ressources ainsi dédiés à des communications établies entre les deuxièmes terminaux mobiles d'un groupe actif ont leurs positions figées dans les trames et ne peuvent donc être alloués au cours de ces communications établies à d'autres terminaux d'un autre groupe ou à des premiers terminaux.

Le réseau à large bande peut être utilisé pour déployer plusieurs groupes de terminaux privés professionnels. Dans ce cas, le procédé d'allocation comprend
une configuration de la deuxième zone de chaque trame descendante en des premiers sous-canaux réservés pour des données à émettre respectivement vers des groupes de deuxièmes terminaux mobiles, les premiers sous-canaux ayant des débits prédéterminés et étant constitués chacun par au moins un bloc de ressources ayant une position prédéterminée dans la deuxième zone des trames descendantes, et une configuration de la deuxième zone de chaque trame montante en des deuxièmes sous-canaux réservés pour des données à recevoir respectivement des groupes de deuxièmes terminaux, les deuxièmes sous-canaux ayant des débits prédéterminés et étant constitués chacun par au moins un bloc de ressources ayant une position prédéterminée dans la deuxième zone des trames montantes,
une allocation des premiers sous-canaux en priorité à des données à émettre respectivement vers les groupes de deuxièmes terminaux, et
une allocation d'un deuxième sous-canal réservé à un groupe en priorité à des données à recevoir de l'un des deuxièmes terminaux du groupe.

La station de base peut être adaptée à transmettre simultanément ou non des données de trafic de diverses qualités de service, comme de la voix et des images ou des séquences vidéo, par la station de base vers un groupe de terminaux. Par exemple, les données de trafic sont la voix des usagers des terminaux du groupe et une image ou une séquence vidéo transmise par un terminal du groupe à travers l'infrastructure du réseau à large bande. Dans ce cas, le procédé de l'invention peut comprendre une réservation de premiers sous-canaux ayant des débits prédéterminés différents et constitués respectivement par des blocs de ressources ayant des positions prédéterminées dans la deuxième zone des trames descendantes pour un premier des groupes de deuxièmes terminaux mobiles, et une allocation d'un premier sous-canal en priorité à des données à émettre avec au plus le débit du premier sous-canal vers le premier groupe.

Les paramètres de qualité de service peuvent être différents d'un groupe à un autre. Si un premier groupe a besoin d'utiliser souvent un premier sous-canal à débit élevé dans les trames descendantes, un tel canal peut lui être réservé d'office. Par contre, si un deuxième sous-canal à débit élevé est réservé dans les trames descendantes pour un deuxième groupe qui ne l'utilise que sporadiquement, le deuxième sous-canal occupe de la bande passante le plus souvent inutilement. Pour éviter cette réservation pour le deuxième groupe et rendre possible une émission de données à débit élevé par la station de base vers le deuxième groupe, le procédé peut comprendre, lorsque le débit de données à émettre vers les terminaux mobiles d'un deuxième groupe est supérieur au débit de tout premier sous-canal réservé pour le deuxième groupe et au plus égal au débit de l'un desdits plusieurs premiers sous-canaux réservés pour le premier groupe, une allocation temporaire dudit un premier sous-canal aux données à émettre vers les terminaux mobiles dudit deuxième groupe tant qu'aucune donnée n'est à émettre vers le premier groupe dans ledit un premier sous-canal.

En variante, l'allocation temporaire ne peut être exécutée que si la somme des débits des sous-canaux réservés pour le deuxième groupe est inférieure au débit de données de trafic à émettre vers le deuxième groupe. Dans cette variante, des sous-canaux réservés pour le deuxième groupe peuvent être agrégés momentanément en un sous-canal à débit plus élevé pour satisfaire un besoin en débit du deuxième groupe.

Lorsqu'un premier groupe de terminaux mobiles est inactif et lorsque les autres groupes n'ont aucun besoin de ressources supplémentaires à la quantité des ressources qui leur sont réservées, la bande passante réservée pour le premier groupe dans les trames descendantes demeure inoccupée. L'invention prévoit alors de rendre disponible cette bande passante inoccupée pour des liens descendants avec les premiers terminaux, c'est-à-dire des terminaux, tels que des terminaux du public, pour lesquels les communications ont une priorité plus faible que les communications pour les terminaux de groupe. Pour y parvenir, le procédé peut comprendre, lorsque la première zone dans les trames descendantes est indisponible pour qu'une portion de celle-ci soit allouée à des données à émettre vers un premier terminal mobile, une allocation temporaire de l'un desdits premiers sous-canaux aux données à émettre vers le premier terminal mobile tant qu'aucune donnée n'est à émettre vers les terminaux mobiles des groupes dans ledit un premier sous-canal.

L'invention prévoit des réservations et des allocations sélectives temporaires dans les deuxièmes zones des trames montantes pour des raisons similaires aux réservations et allocations temporaires présentées ci-dessus dans les deuxièmes zones des trames descendantes. Selon une caractéristique de l'invention, le procédé peut comprendre une réservation de deuxièmes sous-canaux ayant des deuxièmes débits prédéterminés différents et constitués respectivement par des blocs de ressources ayant des positions prédéterminées dans la deuxième zone des trames montantes pour le premier groupe, et une allocation d'un deuxième sous-canal en priorité à des données à recevoir avec au plus le débit du premier sous-canal de l'un des terminaux mobiles du premier groupe. Selon une autre caractéristique de l'invention, le procédé peut comprendre, lorsque le débit de données à recevoir de l'un des terminaux mobiles d'un deuxième groupe est supérieur au débit de tout sous-canal réservé pour le deuxième groupe et au plus égal au débit de l'un desdits deuxièmes sous-canaux réservés pour le premier groupe, une allocation temporaire dudit un deuxième sous-canal aux données à recevoir dudit un terminal mobile du deuxième groupe tant qu'aucune donnée n'est à recevoir du premier groupe dans ledit un deuxième sous-canal. Selon encore une autre caractéristique de l'invention, le procédé peut comprendre, lorsque la première zone dans les trames montantes est indisponible pour qu'une portion de celle-ci soit allouée à des données à recevoir d'un premier terminal mobile, une allocation temporaire de l'un desdits deuxièmes sous-canaux aux données à recevoir du premier terminal mobile tant qu'aucune donnée n'est à recevoir des terminaux mobiles des groupes dans ledit un deuxième sous-canal.

Selon un autre aspect de l'invention visant à accroître la rapidité d'allocation de ressources dans les deuxièmes zones des trames montantes à des données de trafic à recevoir d'un deuxième terminal, un deuxième sous-canal peut être alloué aux données à recevoir d'un terminal mobile du premier groupe lorsque la station de base a reçu au moins l'une de plusieurs requêtes d'allocation émises dans un champ de signalisation des trames montantes par ledit un terminal mobile du premier groupe.

Pour réduire la quantité de ressources dans des trames montantes ou descendantes réservées à des sous-canaux d'un groupe ayant des débits différents, il est préférable que des sous-canaux réservés pour ce groupe dans des trames montantes ou descendantes aient des débits multiples entiers d'un débit minimal de l'un des sous-canaux, et qu'un sous-canal réservé pour ce groupe ayant un débit immédiatement supérieur à celui d'un autre sous-canal réservé pour ce groupe comprenne les blocs de ressources réservés de l'autre sous-canal.

L'invention concerne également une combinaison de trames descendantes à émettre par une station de base vers des terminaux mobiles et de trames montantes à recevoir des terminaux mobiles par la station de base, des blocs de ressources étant répartis en temps et en fréquence dans les trames. La combinaison est caractérisée en ce qu'elle comprend
dans chaque trame descendante, des première et deuxième zones réservées pour des données respectivement à émettre vers des premiers et deuxièmes terminaux mobiles et dans chaque trame montante des première et deuxième zones réservées pour des données respectivement à recevoir des premiers et deuxièmes terminaux,
dans les premières zones des trames descendantes et montantes, des blocs de ressources à allouer de manière partagée entre des données à émettre vers et à recevoir des premiers terminaux mobiles, les positions d'un bloc de ressources à allouer à des données à émettre vers un premier terminal et d'un bloc de ressources à allouer à des données de trafic à recevoir du premier terminal étant variables dans les premières zones,
dans les deuxièmes zones des trames descendantes, au moins un bloc de ressources ayant une position prédéterminée à allouer en priorité à des données à émettre vers tous les deuxièmes terminaux mobiles, et
dans les deuxièmes zones des trames montantes, au moins un bloc de ressources ayant une position prédéterminée à allouer en priorité à des données à recevoir de l'un des deuxièmes terminaux mobiles.

L'invention concerne aussi une station de base apte à allouer des blocs de ressources radio à des terminaux mobiles dans des trames descendantes à émettre par la station de base et dans des trames montantes à recevoir des terminaux mobiles, les blocs de ressources étant répartis en temps et en fréquence dans les trames. La station de base est caractérisée en ce qu'elle comprend
un moyen pour configurer chaque trame descendante en des première et deuxième zones réservées pour des données respectivement à émettre vers des premiers et deuxièmes terminaux mobiles et de chaque trame montante en des première et deuxième zones réservées pour des données respectivement à recevoir des premiers et deuxièmes terminaux,
un moyen pour allouer des blocs de ressources dans les premières zones des trames descendantes et montantes partagée entre des données à émettre vers et recevoir des premiers terminaux mobiles, les positions d'un bloc de ressources alloué à des données à émettre vers un premier terminal et d'un bloc de ressources alloué à des données à recevoir du premier terminal étant variables dans les premières zones,
un moyen pour allouer au moins un bloc de ressources ayant une position prédéterminée dans les deuxièmes zones des trames descendantes en priorité à des données à émettre vers tous les deuxièmes terminaux mobiles, et
un moyen pour allouer au moins un bloc de ressources ayant une position prédéterminée dans les deuxièmes zones des trames montantes en priorité à des données à émettre par l'un des deuxièmes terminaux mobiles.

L'invention concerne encore à un réseau de radiocommunication à large bande comprenant des stations de base et des terminaux mobiles. Le réseau est caractérisé en ce que chaque station de base est conforme à l'invention.

Enfin, l'invention se rapporte à un programme d'ordinateur apte à être mis en oeuvre dans une station de base. Le programme est caractérisé en ce qu'il comprend des instructions qui, lorsque le programme est exécuté dans la station de base, réalisent le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un réseau de radiocommunication à large bande selon l'invention ;
- les figures 2 et 4 sont des diagrammes de répartition temporelle et fréquentielle de zones et blocs de ressources radio dans des trames descendante et montante selon l'invention ;
- la figure 3 montre un diagramme en temps et fréquence d'un bloc de ressource radio ;
- la figure 5 est un bloc-diagramme schématique d'une station de base selon l'invention dans le réseau de radiocommunication à large bande ; et
- la figure 6 est un algorithme du procédé d'allocation de ressources radio selon l'invention.

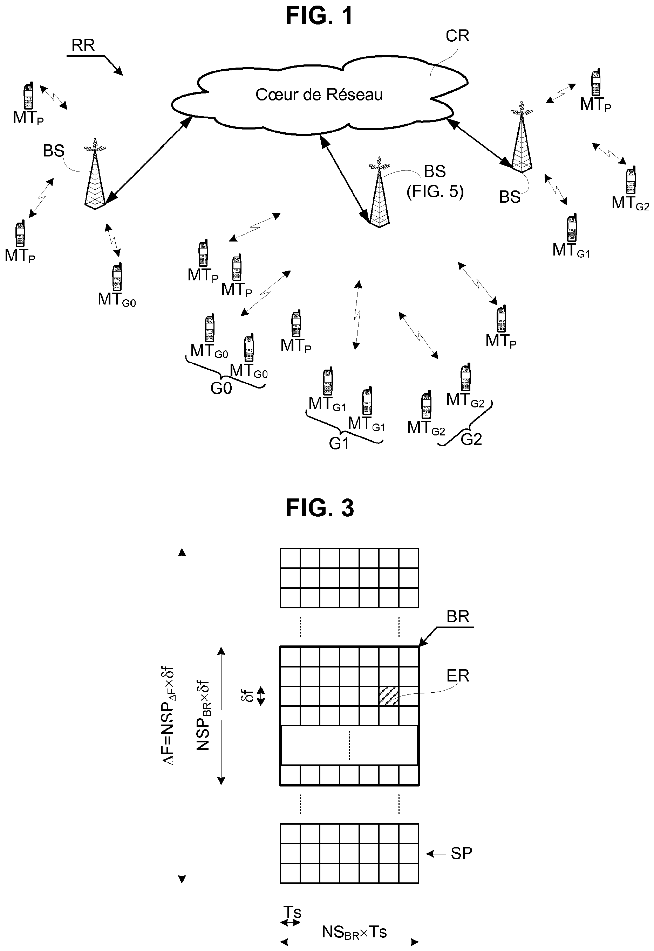

En référence à la figure 1, un réseau de radiocommunication cellulaire à large bande RR comprend des stations de base BS et des terminaux mobiles d'usager MTP et MT_{G} propres à communiquer avec les stations de base.

Toutes les stations de base étant identiques, la répartition de ressources radio décrite ci-après concerne une cellule radio couverte par une station de base BS et des premiers terminaux mobiles MT_{P}, et des deuxièmes terminaux mobiles MT_{G} situés sous la couverture de la cellule radio. Les communications pour les premiers terminaux mobiles, dits terminaux de faible priorité MT_{P}, ont une priorité plus faible que les communications de priorité plus élevée pour les deuxièmes terminaux mobiles MT_{G}, dits terminaux de mission critique. Les premiers terminaux mobiles comprennent des terminaux mobiles du grand public, particuliers et entreprises, et éventuellement des terminaux privés destinés à des missions critiques et ayant une priorité plus faible que les deuxièmes terminaux mobiles MT_{G}.

Les terminaux mobiles communiquent avec la station de base à travers des trames périodiques TR_{DL} de liens descendants (DL) émises par la station de base vers les terminaux mobiles et des trames périodiques TR_{UL} de liens montants (UL) émises depuis les terminaux mobiles vers la station de base BS. Les trames constituent des ressources radio en nombre limité que la station de base doit répartir entre les terminaux mobiles en fonction des besoins en qualité de service des terminaux. Des données de signalisation et des données de trafic sont transmises à l'interface radio entre la station de base BS et les terminaux mobiles.

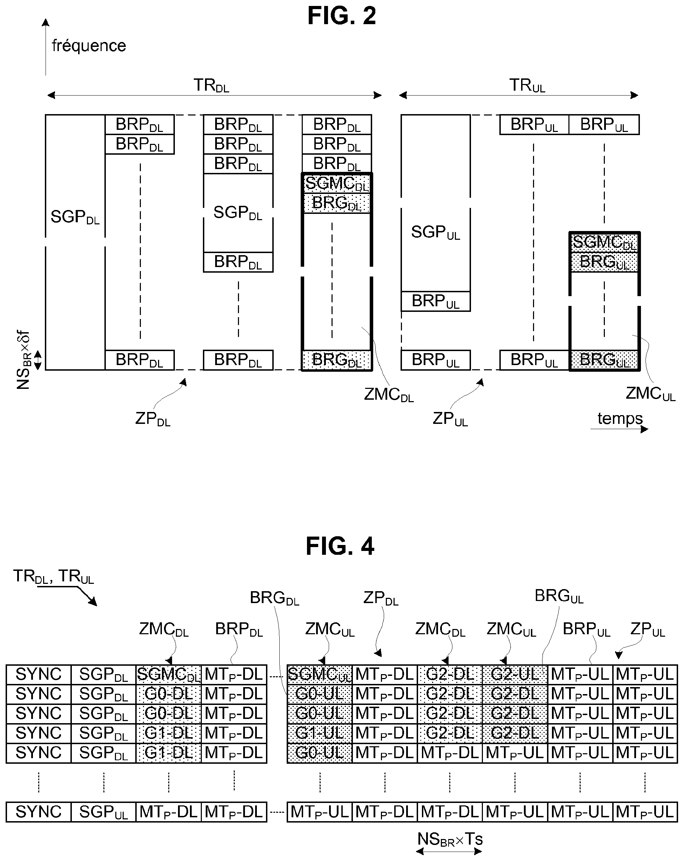

Comme montré à la figure 2, chaque trame TR_{DL}, TR_{UL} est configurée en deux zones de ressources radio. Une trame descendante TR_{DL} est divisée en une première zone ZP_{DL} réservée pour des données de signalisation et des données de trafic à émettre vers les premiers terminaux mobiles MT_{P} et une deuxième zone ZMC_{DL} réservée pour des données de signalisation et des données de trafic à émettre vers les deuxièmes terminaux mobiles MT_{G}. Une trame montante TR_{UL} est divisée en une première zone ZP_{UL} réservée pour des données de signalisation et des données de trafic à recevoir des premiers terminaux mobiles MT_{P} et une deuxième zone ZMC_{UL} réservée pour des données de signalisation et des données de trafic à recevoir des deuxièmes terminaux mobiles MT_{G}.

Pour les liens de communication descendants DL et montants UL, la station de base BS partage avec les terminaux mobiles des ressources radio réparties dans une large bande de fréquence utile prédéterminée ΔF comprenant NSP_{ΔF} sous-porteuses SP ayant une bande étroite de largeur δf= ΔF/NSP_{ΔF}. pendant une trame TR_{DL} pour les liens montants ou une trame TR_{UL} pour les liens descendants. Au moins un bloc de ressources radio BR est alloué à un lien actif. Comme montré à la figure 3, chaque bloc de ressources comprend NS_{BR} × NSP_{BR} éléments de ressources radio ER répartis sur NS_{BR} périodes de symbole consécutives Ts et NSP_{BR} sous-porteuses SP consécutives ou non consécutives. Chaque élément de ressources radio ER contient un symbole à multiplexage par répartition en fréquences orthogonales OFDM ("Orthogonal Frequency Division Multiplexing" en anglais). Le nombre NS_{BR} peut être compris par exemple entre 2 et 10 et le nombre NSP_{BR} peut être compris par exemple entre 10 et 30. Ainsi un bloc de ressources BR constitue la plus petite unité d'allocation pendant laquelle la station de base peut transmettre des données à un terminal mobile sur un lien descendant, ou un terminal mobile peut transmettre des données à la station de base sur un lien montant. Les caractéristiques d'un symbole de données dans un élément de ressources ER d'un lien actif dépendent du débit et du type de modulation utilisé pour des données transmises dans l'élément de ressources. Par exemple, la modulation est une modulation à saut de phase PSK ou une modulation d'amplitude en quadrature de phase à plusieurs niveaux QPSK ou QAM16 ou QAM64. Différents types de modulation peuvent être utilisés pour un même bloc de ressources dans des trames consécutives par exemple pour de la signalisation ou pour des données de trafic d'usager.

Par exemple selon une première réalisation, les liens de communication descendants DL et les liens de communication montants UL sont respectivement du type à accès multiple à multiplexage de fréquences orthogonales OFDMA et du type à accès multiple à multiplexage de fréquences à unique porteuse SC-FDMA. Pour l'accès OFDMA d'un lien descendant DL, des suites de symboles consécutives sont transmises en parallèle l'une après l'autre chacune sur les NSP_{BR} sous-porteuses d'un bloc pendant l'une des NS_{SR} × Ts périodes de symbole. Pour l'accès SC-FDMA d'un lien montant UL, des suites de symboles consécutives sont transmises en série l'une après l'autre chacune sur l'une des NSP_{BR} sous-porteuses d'un bloc pendant la fente NS_{BR} × Ts périodes de symbole.

Les blocs de ressources de données de trafic alloués à un lien avec un terminal mobile dans les trames TR_{DL}, TR_{UL} constituent un sous-canal SC. Un sous-canal SC peut comprendre un ou plusieurs blocs de ressources dans des trames consécutives ou non consécutives en fonction notamment de la qualité de service notamment relative au débit dans ce lien. Les blocs de ressources du sous-canal SC peuvent être répartis aussi bien dans le domaine fréquentiel sur les sous-porteuses que dans le domaine temporel sur les périodes de symbole dans les trames. Un bloc de ressources ayant la même position en fréquence et en temps dans des trames descendantes ou montantes peut être associé à des sous-canaux et des liens différents. Les blocs de ressources s'étendant sur NS_{BR} périodes de symbole consécutives Ts constituent une fente temporelle allouée a priori à plusieurs liens actifs, à raison d'un ou plusieurs blocs de ressources de la fente temporelle par lien.

Le plus souvent les besoins en débits étant élevés dans les liens descendants, les trames descendantes TR_{DL} ont une durée, exprimée en nombre de fentes, supérieure à celle des trames montantes TR_{UL}, comme montrée à la figure 2.

L'association d'un bloc de ressources de données de trafic à un lien descendant DL ou montant UL est décidée par la station de base BS. Selon un exemple, le réseau RR fonctionne en mode duplex à division de fréquence FDD ("Frequency Division Duplex" en anglais), et la station de base BS émet et reçoit simultanément des blocs de ressources répartis sur deux ensembles différents de NSP_{BR} fréquences respectivement associés aux liens descendant et montant d'une communication avec un terminal mobile MT_{P}. Selon un autre exemple, le réseau RR fonctionne en mode duplex à division du temps TDD ("Time Division Duplex" en anglais), et la station de base BS émet et reçoit pendant des fentes temporelles NSY_{BR} × Ts différentes des blocs de ressources sur un ensemble commun de NSP_{BR} fréquences et respectivement associés aux liens descendant et montant d'une communication avec un terminal mobile MT_{P}.

Les zones ZP_{DL}, ZP_{UL} dans les trames sont allouées de manière connue à des liens classiques pour des communications avec les terminaux mobiles de plus faible priorité MT_{P} dont les usagers, comme des particuliers et des employés de sociétés, constituent pour la plupart le public. On rappelle ci-après les caractéristiques de trames connues qui se retrouvent dans les premières zones ZP_{DL} et ZP_{UL} des trames TR_{DL} et TR_{UL} selon l'invention.

Comme montré à la figure 2, la zone ZP_{DL}, ZP_{UL} comprend au moins un champ de signalisation SGP_{DL}, SGP_{UL} et une zone de ressources pour des données de trafic représentées par des blocs de données de trafic BRP_{DL}, BRP_{UL}. Le champ de signalisation SGP_{DL}, SGP_{UL} occupe le début de la trame par exemple sur une à trois premières périodes de symbole. La trame peut également contenir d'autres champs de signalisation. Un champ de signalisation peut occuper une ou plusieurs périodes de symbole consécutives et s'étaler sur les NSP_{ΔF} sous-porteuses ou sur quelques sous-porteuses consécutives (SP). Un bloc de données de trafic BRP_{DL}, BRP_{UL} peut contenir des données de trafic et des données de signalisation en plus faible quantité. Dans les figures 2 et 4, on a supposé que les champs réservés pour la signalisation ont la largeur d'une fente.

La signalisation dans une trame descendante TR_{DL} peut être relative notamment à la synchronisation SYNC entre la station de base et les terminaux mobiles, des symboles de pilotes répartis dans la trame pour une estimation des canaux de propagation des liens, la recherche et l'identification de cellule de station de base par les terminaux mobiles, l'allocation de ressources comme l'ordonnancement des sous-porteuses et des blocs de ressources de données de trafic BRP_{DL} et BRP_{UL} alloués aux terminaux mobiles dans la trame descendante et éventuellement dans la trame montante, le transport point à point ("unicast" en anglais) et en multidiffusion ("multicast" en anglais), des accès aléatoires pour établissement d'appel, des requêtes de répétition et des acquittements, etc. La signalisation dans une trame montante TR_{UL} peut être relative notamment à l'allocation de ressources comme l'ordonnancement des sous-porteuses et des blocs de ressources de données de trafic alloués aux terminaux mobiles dans la trame montante si cette allocation de ressources n'est pas incluse dans la trame de lien descendant, des pilotes, des réglages en puissance, fréquence et temps, des acquittements, des requêtes, etc.

Par exemple, selon une première réalisation, le réseau de radiocommunication à large bande RR est basé sur la technologie connue LTE ("Long Term Evolution" en anglais) avec une largeur de bande ΔF de plusieurs centaines de MHz à quelques GHz et une transmission en mode duplex ou semi-duplex FDD ou TDD et des débits inférieurs à 330 Mbit/s pour les liens descendants et inférieurs à 90 Mbit/s pour les liens montants. La bande ΔF est par exemple de 20 MHz pour contenir une centaine de blocs de ressources utiles sur NSP_{ΔF} = 2048 sous-porteuses SP. Un bloc de ressources BRP_{DL}, BRP_{UL} s'étale par exemple sur une fente de 7 périodes de symboles Ts = 71,4 µs, y compris avec un temps de garde pour préfixe cyclique qui est une copie de la fin de la période de symbole suivante, soit 0,5 ms, et sur NSP_{ΔF} = 12 sous-porteuses de largeur δf = 15 kHz. Chaque trame comprend 20 fentes temporelles et a une durée de 10 ms. Les trames descendantes TR_{DL} comprennent des blocs de ressources du type à accès OFDMA et les trames de montantes TR_{UL} comprennent des blocs de ressources du type à accès SC-FDMA.

L'allocation des ressources par blocs selon la technologie LTE est réalisée dans chaque sous-trame composée de deux fentes consécutives. La répartition en deux zones de ressources ZP et ZMC selon l'invention est effective dans des sous-trames prédéterminées de chaque sous-trame.

La signalisation dans une trame descendante TR_{DL} par exemple en mode FDD peut comprendre des champs de signalisation notamment pour un signal de référence (pilote) RS dans les première et cinquième périodes de symbole de chaque fente, un canal de contrôle physique PDCCH pour ordonnancement de bloc et acquittement dans les trois premières périodes de symbole de la première fente de chacune de 10 sous-trames à deux fentes consécutives, des canaux de synchronisation primaire P-SCH et secondaire S-SCH sur quelques sous-porteuses centrales dans les septième et sixième périodes de symbole des première et onzième fentes, et un canal de diffusion physique PBCH sur quelques sous-porteuses centrales dans les quatre premières périodes de symbole de la deuxième fente. Les éléments de ressources radio restants sont des ressources disponibles pour des données de trafic d'usager ("payload" en anglais) constituant un canal partagé physique PDSCH.

La signalisation dans une trame montante TR_{UL} peut comprendre des champs de signalisation relatifs notamment à un signal de référence (pilote) RS réparti par exemple dans les cinq dernières périodes de symbole de chaque fente, et un canal d'accès aléatoire PRACH et un canal de contrôle physique PUCCH pour ordonnancement des ressources et acquittement de requêtes dans les deux premières périodes de symbole de chaque fente. Les éléments de ressources radio restants sont des ressources disponibles pour des données de trafic d'usager constituant un canal partagé physique PUSCH.

Une trame montante ou descendante connue telle que décrite ci-dessus est ainsi divisée seulement en des champs de signalisation et la zone de ressources pour des données de trafic qui occupe la majeure partie de la trame. La zone de ressources pour données de trafic est partagée classiquement entre les communications des terminaux mobiles MT_{P} avec la station de base BS dans la large bande de fréquence utile ΔF.

La zone ZP_{DL}, ZP_{UL} dans une trame TR_{DL}, TR_{UL} de l'invention est ainsi similaire à une trame connue pour la signalisation et les données de trafic relatives aux premiers terminaux mobiles MT_{P}. La zone ZP_{DL}, ZP_{UL} est disponible le plus souvent pour des services à bande étroite comme de la voix sur IP ("internet Protocol" en anglais) et parfois pour d'autres services à large bande du type point à point ("unicast" en anglais) ou du type point à multipoint, dit multidiffusion ("multicast" en anglais), comme des services de diffusion/multidiffusion à large bande pour multimédia évolué eMBMS ("evolved Multimedia Broadcast Multicast Service" en anglais) ou des services de diffusion/multidiffusion sur un réseau à fréquence unique MBSFN ("Multimedia Broadcast over Single Frequency network" en anglais) par exemple relatifs à de la vidéo, comme des services de télévision ou de vidéoconférence pour terminaux mobiles, ou tout autre service de données spécifiques à toute interactivité entre une station de base et un terminal mobile comme une navigation sur internet. Les applications dans les terminaux mobiles MT_{P} et la station de base BS sous forme de modules logiciels pour traiter des données d'usager relatives à ces services ont ainsi des besoins en qualité de service différents. La qualité de service d'un lien de communication montant ou descendant dépend de paramètres de qualité, comme un débit pouvant être compris entre des débits minimal et maximal, une périodicité de ressources radio, une durée de communication, une gigue, un délai d'attente, une priorité et un taux d'erreur, transmis dans une requête par une application à un allocateur dans la station de base BS.

L'acceptation des ressources requises pour un lien de communication par la station de base BS dépend des ressources disponibles dans la zone correspondante ZP_{DL}, ZP_{UL} qui ne sont pas déjà occupées par d'autres liens actifs. Les ressources requises peuvent donc être partiellement acceptées ou refusées en fonction des ressources disponibles et des paramètres de qualité associés au lien. En outre, la position du ou des blocs de ressources BRP_{DL}, BRP_{UL} alloués aux données de trafic d'un lien dans les trames TR_{DL}, TR_{UL} n'est pas figée et est modifiée périodiquement par la gestion dynamique des ressources dans la station de base BS en fonction des besoins en trafic variables des applications dans la station de base et les terminaux mobiles MT_{P}. Après un nombre prédéterminé de période de trame, par exemple quelques périodes de trame, définissant une période d'ordonnancement de bloc, la station de base BS ordonnance dynamiquement les ressources de la zone ZP_{DL}, ZP_{UL} en allouant aux liens actifs des blocs de ressources BRP_{DL}, BRP_{UL} qui ont a priori des positions dans la trame différentes de celles au cours de la période d'ordonnancement de bloc précédente. L'ordonnancement périodique des blocs suit des règles d'allocation qui dépendent notamment de conditions de propagation dans les liens, de taux d'occupation des blocs et des distances entre les terminaux MT_{P} et la station de base BS notamment pour diminuer les interférences entre des sous-canaux proches. En cas de saturation de la zone ZP_{DL}, ZP_{UL} ou de surcharge du réseau RR, des débits requis ou obtenus par des liens peuvent être diminués et/ou des appels entrants ou sortants peuvent être refusés et/ou certaines classes de communication peuvent être interrompues.

Par conséquent, l'allocation partagée variable et dynamique, et donc incertaine, des blocs de ressources BRP_{DL} et BRP_{UL} dans les premières zones ZP_{DL} et ZP_{UL} des trames descendantes et montantes TR_{DL} et TR_{UL} aux terminaux mobiles de faible priorité MT_{P} ne présente pas une sécurité suffisante pour des communications avec les terminaux mobiles de mission critique MT_{G} de priorité élevée qui doivent être établies rapidement et conservées sans aucune perturbation indépendamment de tout aléa lié à des communications de faible priorité.

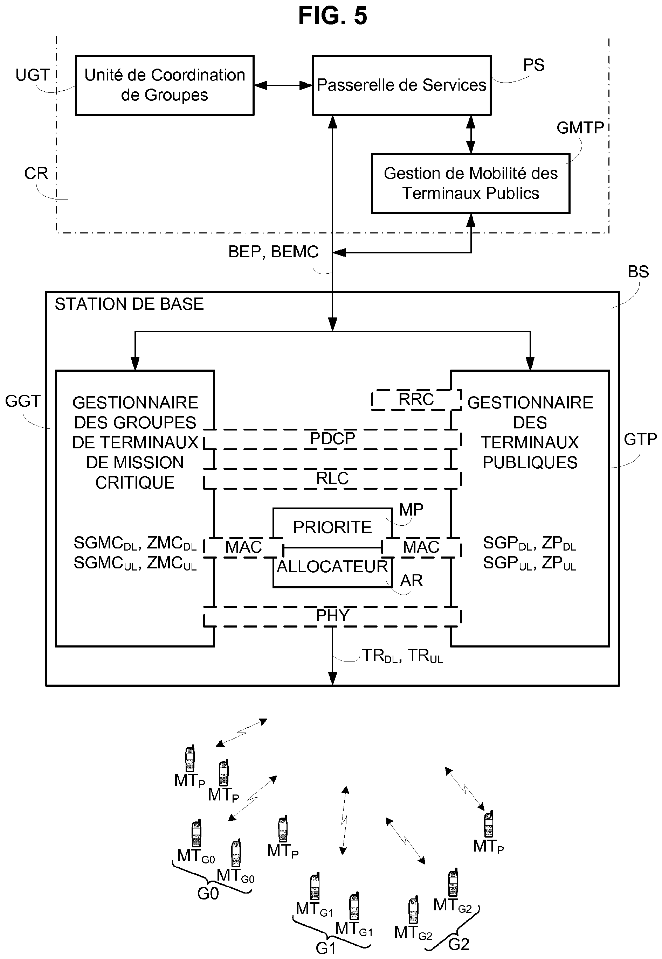

En se référant maintenant à la figure 5, la station de base BS constitue un noeud B évolué dans un réseau d'accès radio terrestre universel UTRAN ("Universal Terrestrial Radio Access Network" en anglais) et est reliée à une unité de gestion de mobilité GMTP pour les terminaux mobiles de faible priorité MT_{P} et à une passerelle de services PS dans le coeur CR du réseau RR. L'unité GMTP gère notamment l'établissement et la libération des liens de communication et le transfert des terminaux mobiles de faible priorité MT_{P} d'une cellule vers une autre cellule. La passerelle PS donne accès à divers autres réseaux de communication comme des réseaux radio cellulaires, l'internet et un réseau téléphonique commuté. L'unité GMTP et la passerelle PS communiquent avec la station de base BS par des supports d'accès radio BEP qui sont des flux de paquets et dont certains ("signalling radio bearer" en anglais) transportent de la signalisation échangée avec la station de base et dont d'autres ("data radio bearer" en anglais) transportent des données de trafic destinées à être échangées avec les terminaux mobiles de faible priorité MT_{P}. Les supports d'accès radio dépendent de la qualité de service notamment en termes de débit des communications avec les terminaux mobiles MT_{P}.

Dans la station de base BS de l'invention montrée à la figure 5 ne sont représentées schématiquement que des fonctions en relation avec l'invention et pouvant correspondre à des modules logiciels implémentés dans un ou plusieurs processeurs et/ou à des modules matériels dédiés ou programmables. En particulier pour une cellule radio, la station de base BS comprend un gestionnaire de ressources radio GTP pour les terminaux mobiles de faible priorité MT_{P}, un gestionnaire de ressources radio GGT pour des groupes de terminaux professionnels MT_{G} de mission critique (MC), et un allocateur de ressources AR et un module de priorité MP reliés aux gestionnaires GTP et GGT.

Le gestionnaire GTP gère les ressources à l'interface radio entre la station de base BS et les terminaux mobiles de faible priorité MT_{P}. Le gestionnaire GTP assure les diverses fonctionnalités de différentes couches de protocole pour traiter les supports d'accès radio reçus BEP et construire des supports d'accès radio BEP à transmettre à la passerelle PS et à l'unité GMTP et pour construire et allouer des sous-canaux de transport à émettre vers les terminaux MT_{P} et à recevoir des terminaux MT_{P}. Une couche de contrôle de ressources radio RRC ("Radio Resource Control" en anglais) gère la signalisation relative notamment à l'établissement et la libération de lien et la mobilité des terminaux MT_{P} dans les supports d'accès radio pour des connexions entre les terminaux MT_{P} et le coeur de réseau CR. Une couche de protocole de convergence de données de paquet PDCP ("Packet data Convergence Protocol" en anglais) sert notamment à la compression-décompression des données et au déchiffrement-chiffrement des données dans les supports d'accès radio BEP. Une couche de contrôle de lien radio RLC ("Radio Link Control" en anglais) désassemble les paquets des supports d'accès radio en unité de données de protocole dans des canaux logiques distincts pour la signalisation et les données de trafic et réassemble les unités de données de protocole en paquets, et traite des erreurs de transmission de manière à répéter des paquets qui ont été reçus erronés ou non reçus. Une couche de contrôle d'accès MAC ("Media Access Control" en anglais) formate au moyen de l'allocateur AR la signalisation et les données de trafic en des blocs de ressources BR_{DL} et BR_{UL} et ordonnance les blocs de ressources dans les zones ZP_{DL} et ZP_{UL} des trames TR_{DL} et TR_{UL} pour le transport de la signalisation et des données de trafic dans des sous-canaux. Le module de priorité MP au niveau de la couche MAC traite des priorités d'accès à des sous-canaux entre les terminaux MT_{P}. Enfin une couche physique PHY assure notamment le codage-décodage, la modulation-démodulation OFDM et l'émission et la réception de la signalisation et des données de trafic dans les sous-canaux de transport à l'interface radio avec les terminaux mobiles MT_{P}. En particulier selon l'exemple précité relatif à la technologie LTE, la couche physique forme les canaux précités PDCCH, P-SCH, S-SCH, PBCH et PDSCH dans la première zone ZP_{DL} des trames descendantes TR_{DL} et extrait les canaux précités PRACH, PUCCH et PUSCH de la première zone ZP_{UL} des trames montantes TR_{UL}.

L'allocateur AR contrôle dynamiquement l'allocation des ressources en temps et fréquence dans les trames TR_{DL} et TR_{UL} aux liens descendants DL et montants UL avec les terminaux mobiles en fonction de règles d'allocation dépendant de la qualité de service requise pour les données à transmettre dans les liens et des conditions de propagation dans les liens. Le module de priorité MP est adossé à l'allocateur et donne une priorité d'accès à des ressources à des flux de données de trafic relatifs à certaines catégories de terminaux par rapport d'autres catégories de terminaux en fonction de règles de priorité, comme on le verra plus loin.

Le gestionnaire GGT présente des fonctionnalités au niveau des couches PDCP, RLC, MAC et PHY pour les deuxièmes terminaux mobiles MT_{G} similaires à celles du gestionnaire GTP et d'autres fonctionnalités spécifiques au caractère d'une mission critique pour laquelle les terminaux mobiles MT_{G} sont utilisés. Le gestionnaire GGT échange via la passerelle de services PS des paquets de supports d'accès radio BEMC avec une unité de coordination de groupes de terminaux de mission critique UGT. L'unité UGT gère la constitution de plusieurs groupes de terminaux de mission critique, l'identification des groupes et des terminaux MT_{G} dans ces groupes et les appels des terminaux MT_{G} et coordonne la mobilité des terminaux MT_{G} entre les cellules radio des stations de base du réseau RR. L'unité UGT retransmet des données de trafic d'un terminal d'un groupe dans une cellule vers tous les autres terminaux du groupe pouvant être répartis dans différentes cellules radio du réseau RR. Le nombre de groupe de terminaux mobiles MT_{G} est au moins égal à 1 et chaque groupe G peut comprendre plusieurs dizaines ou centaines de terminaux mobiles MT_{G}.

Une mission critique (MC) de sécurité publique concerne un événement comme une manifestation ou un accident qui est géré par des groupes d'usagers professionnels, tels que des policiers, des pompiers et du personnel d'un service d'aide médicale d'urgence. Les membres d'un groupe doivent communiquer entre eux en toute sécurité sans interruption. Comme montré aux figures 1, 4 et 5, les groupes sont par exemple au nombre de trois G0, G1 et G2. Dans chaque groupe de mission critique G0, G1, G2, tout terminal mobile MT_{GO}, MT_{G1}, MT_{G2} membre du groupe, rattaché à la cellule de la station de base BS à la suite de l'allocation d'au moins un sous-canal de multidiffusion descendant, peut transmettre des données de trafic au groupe, par exemple de voix, diffusées à travers l'unité UGT et le gestionnaire GGT vers d'autres terminaux mobiles membres du groupe attachés à la station de base BS et le cas échéant vers d'autres terminaux mobiles membres du groupe attachés à d'autres stations de base selon l'invention et éventuellement vers des terminaux fixes membres du groupe qui sont par exemple situés dans un centre d'information et de commandement en communication avec l'unité UGT. Un terminal mobile MT_{GO}, MT_{GL}, MT_{G2} peut recevoir des données de trafic de n'importe quel autre terminal mobile ou terminal fixe appartenant au groupe G0, G1, G2 à travers le réseau RR. Les terminaux mobiles des groupes sont des terminaux de priorité élevée par exemple similaires à des terminaux mobiles à gestion numérique ou analogique de type radio terrestre professionnel TETRA, TETRAPOL ou P25.

Dans la station de base BS, le gestionnaire GGT assure les fonctionnalités des couches précitées PDCP, RLC, MAC et PHY relativement aux données de trafic et à la signalisation pour les terminaux mobiles MT_{GO}, MT_{G1}, MT_{G2} dans chacun des groupes G0, G1, G2. En particulier, le gestionnaire GGT est en relation avec l'allocateur AR et le module de priorité MP pour allouer en priorité des ressources sous forme de blocs de ressources BRG_{DL} et BRG_{UL} à des positions prédéterminées en fréquence et en temps dans les deuxièmes zones ZMC_{DL} et ZMC_{UL} des trames TR_{DL} et TR_{UL} pour des données de trafic des terminaux mobiles de chaque groupe. Selon des paramètres de configuration pré-mémorisés dans le gestionnaire GGT, l'allocateur configure des ensembles de sous-canaux physiques réservés respectivement pour les groupes. Un ensemble de sous-canaux pour un groupe est à allouer en priorité aux données de trafic des terminaux mobiles du groupe. Par conséquent, à la différence de l'allocation d'un bloc pour un terminal mobile de faible priorité, aucune sélection variable d'un bloc de ressources disponible dans les trames descendantes ou montantes n'est prévue pour transmettre des données de trafic en relation avec un terminal mobile de groupe.

L'exemple illustré à la figure 4 est relatif à des trames TR_{DL} et TR_{UL} de l'invention entrelacées aussi bien dans le domaine fréquentiel que dans le domaine temporel. La trame descendante TR_{DL} commence par un champ de signalisation SGP_{DL} y compris un champ de synchronisation SYNC en début de trame et comprend une deuxième zone morcelée ZMC_{DL} comportant à la suite du champ de signalisation SGP_{DL} un bloc de signalisation de SGMC_{DL} pour la signalisation des groupes, 2 blocs de données de trafic BRG_{DL}(G0-DL) réservés pour des données de trafic du groupe G0 et 2 blocs de données de trafic BRG_{DL}(G1-DL) réservés pour des données de trafic du groupe G1, puis notamment après une partie de la zone ZP_{DL} avec de nombreux blocs BRP_{DL}(MT_{P}-DL) pour terminaux de faible priorité, 4 blocs de données de trafic BRG_{DL}(G2-DL) réservés pour des données de trafic du groupe G2. La deuxième zone ZMC_{UL} de la trame descendante TR_{UL} est également morcelée et comporte un bloc de signalisation de SGMC_{UL}, 2 blocs de données de trafic BRG_{UL}(G0-UL) réservés pour des données de trafic du groupe G0, 2 blocs de données de trafic BRG_{UL}(G1-UL) réservés pour des données de trafic du groupe G1 et 4 blocs de données de trafic BRG_{UL}(G2-UL) réservés pour des données de trafic du groupe G2 précédant une partie de la zone ZP_{UL} avec de nombreux blocs BRP_{UL}(MT_{P}-UL) pour terminaux de faible priorité MT_{P}.

La bande de fréquence de la zone de ressources ZMC_{DL}, ZMC_{UL} est disponible seulement à un nombre limité de liens avec des terminaux mobiles de plusieurs groupes d'usagers professionnels. La zone de ressources ZMC_{DL}, ZMC_{UL}, morcelée ou non, réservée en priorité à des données de trafic pour la mission critique a un emplacement prédéterminé dans la trame TR_{DL}, TR_{UL}, et est pré-dimensionnée en termes de nombre de blocs de ressources BRG_{DL}, BRG_{UL} dans la trame pour qu'elle satisfasse des besoins maximums en qualité de service de toute mission critique. Ceci signifie que les blocs de ressources BRG_{DL}, BRG_{UL} dans la zone ZMC_{DL}, ZMC_{UL} sont toujours disponibles pour être alloués à une mission critique, même si la zone de ressources ZP_{DL}, ZP_{UL} pour les liens avec les terminaux de faible priorité MT_{P} est surchargée. Les communications pour la mission critique sont le plus souvent relatives à de la voix en bande étroite et parfois à des services de diffusion à large bande par exemple pour de la vidéo et requérant un grand nombre de ressources. La qualité de service pour au moins de la voix relative à chaque groupe est toujours assurée dans la zone ZMC_{DL}, ZMC_{UL}.

Par exemple, la zone de ressources ZMC_{DL}, ZMC_{UL} dans chaque trame TR_{DL}, TR_{UL} est statiquement réservée pour un nombre prédéterminé de sous-canaux radio de voix sur IP à 20 kbit/s, un nombre prédéterminé de sous-canaux radio de voix analogique/numérique par codec à 10 kbit/s et un nombre prédéterminé de sous-canaux radio de données à débit plus élevé, par le gestionnaire GGT au niveau de la couche MAC. Par exemple, 8, 16 ou 24 sous-canaux, y compris au moins un sous-canal descendant et au moins un sous-canal montant pour la signalisation, correspondant chacun à un débit de source minimal de 64 kbit/s sont réservés d'office dans une trame descendante TR_{DL} et une trame montante TR_{UL} pour chaque groupe.

Les champs de signalisation SGMC_{DL} et SGMC_{UL} au début des zones ZMC_{DL} et ZMC_{DL} des trames TR_{DL} et TR_{UL} sont alloués à la signalisation des liens descendants et montants associés aux groupes G0, G1 et G2 et particulièrement à l'ordonnancement des blocs de ressources BRG_{DL} et BRG_{UL} des sous-canaux descendants et montants associés respectivement aux groupes dans les trames. Le champ SGMC_{DL}, SGMC_{UL} contient pour chaque lien d'autres données respectivement similaires à des données de signalisation dans le champ de signalisation SGP_{DL}, SGP_{UL}. Le champ de signalisation SGMC_{UL} est utilisé également pour que le gestionnaire GGT détecte des états de connexion/écoute de sous-canal descendant en multidiffusion respectivement par les terminaux mobiles des groupes G0, G1 et G2 dans les trames montantes TR_{UL}.

Par exemple, le champ de signalisation SGMC_{UL} est composé de 6 blocs de ressources pour gérer 64 requêtes d'allocation RQA des terminaux mobiles MT_{G} appartenant aux groupes. Les conflits d'accès au champ de signalisation SGMC_{UL} par les terminaux mobiles MT_{G} sont gérés par le gestionnaire GGT en répartissant de manière régulière les 6 blocs de ressources, ou les 3 paires de blocs, réservés pour le champ SGMC_{UL} dans chaque trame montante. La répétition d'une requête d'allocation RQA dans un sous-canal de signalisation commun réservé à un groupe par un terminal mobile MT_{G} de ce groupe peut être déclenchée systématiquement, par exemple 2 ou 3 fois sans que la station de base transmette au terminal un acquittement de chaque requête d'allocation afin que la station de base alloue un sous-canal de données de trafic dans la zone ZMC_{UL} au terminal mobile MT_{G}. Ces conditions accroissent la probabilité de détection correcte de chaque requête d'allocation par le gestionnaire GGT et la rapidité d'un terminal mobile MT_{G} à être autorisé par le gestionnaire GGT via l'allocateur de ressources AR à transmettre des données vers les autres terminaux de son groupe.

Au moins un sous-canal montant doit être réservé pour un groupe afin de garantir une émission au moins de la voix depuis un terminal mobile MT_{G} du groupe G, tandis qu'un sous-canal descendant est réservé au groupe G pour garantir que chaque terminal mobile du groupe puisse recevoir en multidiffusion au moins de la voix des autres terminaux mobiles membres du groupe. En conséquence, un sous-canal montant alloué à un groupe est moins utilisé et plus disponible qu'un sous-canal descendant alloué au groupe. Le nombre de sous-canaux de trafic multiplexés dans la zone ZMC_{UL} des trames de lien montant TR_{UL} peut être égal ou inférieur au nombre de sous-canaux de trafic multiplexés dans la zone ZMC_{DL} des trames de lien descendant TR_{DL}. De préférence, les sous-canaux de données de trafic multiplexés réservés pour chaque groupe sont rassemblés statiquement dans la trame TR_{DL}, TR_{UL} ce qui facilite l'adressage des sous-canaux dans les trames.

Un bloc de ressources d'un sous-canal réservé en permanence pour un groupe a toujours la même position dans une trame TR_{DL}, TR_{UL}, c'est-à-dire dans des trames consécutives ou non consécutives TR_{DL}, TR_{UL} en dépendance du débit prédéterminé du sous-canal, et n'est pas modifié après chaque période d'ordonnancement de blocs alloués aux terminaux mobiles de faible priorité MT_{P}.

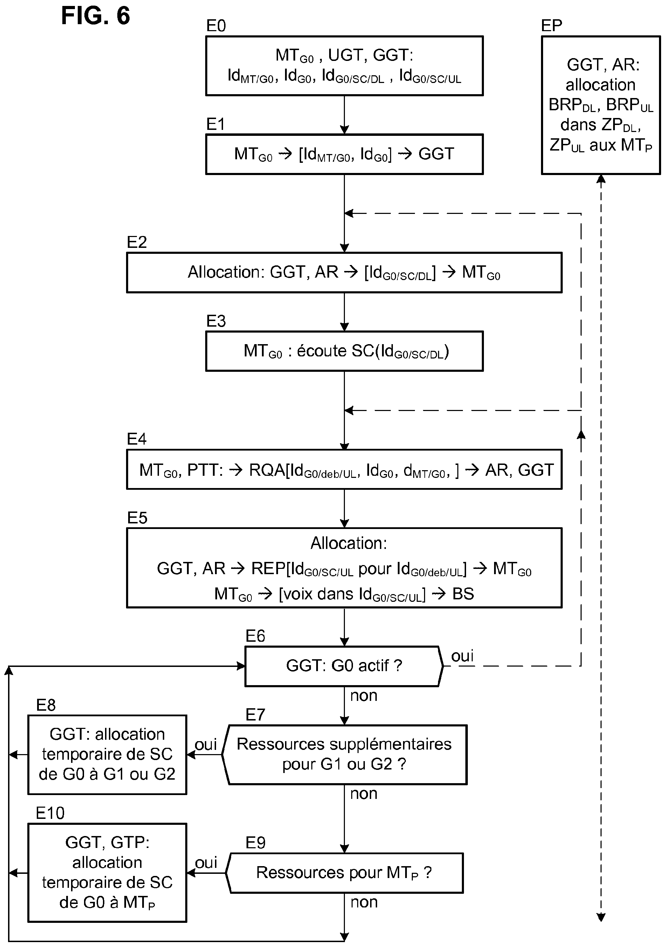

En se référant à la figure 6, l'allocation de sous-canaux à un groupe de mission critique, par exemple le groupe G0, dans la station de base BS selon l'invention comprend des étapes E0 à E10. Des étapes similaires aux étapes E0 à E10 sont exécutées pour l'allocation de sous-canaux à chacun des autres groupes G1 et G2.

A l'étape préalable E0, chacun des terminaux mobiles MT_{G0} appartenant au groupe G0 mémorise son identificateur Id_{MT/G0}, un identificateur Id_{G0} du groupe G0 et des identificateurs Id_{G0/SC/UL} de type de données à émettre associés respectivement à des débits de source différents et donc dans des sous-canaux SC réservés pour le groupe G0 et ordonnancés dans la zone ZMC_{UL} des trames montantes. Ces identificateurs sont convertis dans les terminaux du groupe G0 sous une forme plus lisible pour les usagers professionnels et sont également mémorisés dans l'unité UGT et le gestionnaire GGT selon l'invention. L'unité UGT et le gestionnaire GGT ont aussi pré-mémorisés en association à l'identificateur Id_{G0} du groupe G0 les identificateurs Id_{G0/SC/UL} et des identificateurs Id_{G0/SC/DL} de type de données à émettre vers les terminaux mobiles MT_{G0} et donc associés respectivement à des sous-canaux SC à des débits de source différents réservés pour le groupe G0 et ordonnancés dans la zone ZMC_{DL} des trames descendantes. Les identificateurs précités sont à transmettre dans les champs de signalisation SGMC_{DL} et SGMC_{UL}. Les identificateurs Id_{G0/SC/DL} et Id_{G0/SC/UL} permettent d'identifier les positions des blocs de ressources réservés pour les sous-canaux de données de trafic relatifs au groupe G0 dans l'allocateur AR et dépendent de la pré-configuration des zones ZMC_{DL} et ZMC_{UL} dans les trames.

Simultanément aux étapes E1 à E10 décrites ci-après, le gestionnaire GTP en relation avec l'allocateur AR alloue, d'une manière connue à une étape EP, des blocs de ressources BRP_{DL} et BRP_{UL} dans les premières zones ZP_{DL}, et ZP_{UL} des trames descendantes et montantes partagée entre des données de trafic émises vers et reçues des terminaux mobiles de faible priorité MT_{P}. Les positions d'un bloc de ressources BRP_{DL} alloué à des données de trafic à émettre vers un terminal MT_{P} et d'un bloc de ressources BRP_{UL} alloué à des données de trafic à recevoir du terminal MT_{P} sont variables dans les zones ZP_{DL}, et ZP_{UL}.

Il est supposé que les usagers du groupe G0 ont reçu pour instructions de se connecter au réseau RR afin de recevoir en multidiffusion les données d'un sous-canal de trafic dans les trames descendantes TR_{DL} ayant l'identificateur donné Id_{G0/SC/DL} et réservé pour le groupe G0. En variante, au moins deux ou plus de sous-canaux de trafic à multidiffusion ayant des débits différents et réservés pour le groupe G0 sont alloués simultanément dans la zone ZP_{DL} des trames descendantes TR_{DL} aux terminaux mobiles MT_{G0}.

Dès que l'usager d'un terminal mobile MT_{G0} du groupe G0 met en fonctionnement celui-ci à l'étape E1, le terminal MT_{G0} lit en mémoire son identificateur Id_{MT/G0} et l'identificateur Id_{G0} du groupe G0. Le terminal mobile MT_{G0} émet les identificateurs Id_{MT/G0} et Id_{G0} dans le champ de signalisation SGMC_{UL} d'au moins une trame montante afin que le gestionnaire GGT enregistre la présence d'au moins un membre du groupe G0 dans la cellule radio. A l'étape E2, sous la commande du gestionnaire GGT, l'allocateur AR alloue en priorité au groupe G0 au moins un sous sous-canal de voix réservé pour le groupe G0 dans les trames descendantes si le terminal mobile MT_{G0} est le premier du groupe à se signaler dans la cellule de la station de base BS. L'allocateur AR introduit les identificateurs Id_{G0/SC/DL} et Id_{G0/SC/UL} des sous-canaux de voix dans le champ de signalisation SGMC_{DL} des trames descendantes. A l'étape E3, le terminal mobile MT_{G0} reste ensuite à l'écoute de voix d'autres usagers du groupe G0 dans le sous-canal de trafic SC désigné par l'identificateur donné Id_{GO/SC/DL} qu'il détecte dans les trames descendantes TR_{DL}.

En variante, l'allocation d'un sous-canal de trafic en multidiffusion SC à l'étape E2 peut aussi intervenir lorsqu'une application dans le gestionnaire GGT a reçu une requête d'allocation de l'unité UGT lorsqu'un autre terminal du groupe G0 souhaite transmettre des données de trafic avec un autre débit prédéterminé par exemple plus élevé. Dans ce cas, le sous-canal ayant ledit débit prédéterminé et réservé pour le groupe G0 dans la zone ZMC_{DL} est alloué par le gestionnaire GGT et l'allocateur AR en priorité aux données de trafic transmises par ledit autre terminal du groupe G0.

Si l'usager du terminal MT_{G0} constate qu'aucun membre du groupe ne parle dans le sous-canal de trafic désigné par l'identificateur Id_{G0/SC/DL} et désire prendre la parole à l'étape E4, il sollicite une touche de prise de parole PTT ("Push-To-Talk" en anglais) qui déclenche une requête d'allocation RQA du type RACH ("Random Access Channel" en anglais) incluant un identificateur de débit de voix Id_{G0/deb/UL} et les identificateurs Id_{G0} et Id_{MT/G0} via le champ de signalisation SGMC_{UL} d'au moins une trame montante. Dans une réponse REP à la requête RQA, le gestionnaire GGT inclut à l'étape E5 l'identificateur Id_{G0/SC/UL} d'un sous-canal de trafic SC qui est disponible pour de la voix associée à l'identificateur de débit Id_{G0/deb/UL} et qui est réservé pour le groupe G0 dans la zone ZMC_{UL} des trames montantes TR_{UL}, et commande l'allocation du sous-canal disponible dans l'allocateur AR. Le terminal MT_{G0} détecte l'identificateur Id_{G0/SC/UL} dans le champ SGMC_{DL} d'une prochaine trame descendante. La voix de l'usager est alors émise par le sous-canal de trafic disponible vers la station de base BS qui diffuse la voix de l'usager vers les autres terminaux du groupe G0 à travers le sous-canal de trafic alloué désigné par l'identificateur Id_{G0/SC/DL.}

Chaque prise de parole suivante n'est accompagnée d'aucun échange de signalisation entre le terminal mobile MT_{G0} et la station de base BS pour requérir un sous-canal disponible dans les trames descendantes, puisque l'allocation du sous-canal de trafic ayant l'identificateur Id_{G0/SC/DL} et réservé pour un type de données du groupe G0 dans les trames descendantes est décidée par le gestionnaire GGT préalablement à tout établissement de lien montant avec un terminal mobile du groupe G0. En effet, le gestionnaire GGT ne comprend pas des fonctionnalités de la couche de signalisation RRC.

La connexion de tout autre terminal mobile du groupe G0 au réseau RR pour que l'usager de celui-ci converse avec les autres usagers du groupe G0 est obtenue par exécution des étapes E1 et E3 à E5. L'étape E5 peut comporter en particulier dans le gestionnaire GGT un traitement de requêtes d'allocation RQA répétées par des terminaux mobiles du groupe pour remédier à d'éventuelles collisions de requêtes d'allocation émises simultanément par ces terminaux.

L'émission de données autres que de la voix, avec un débit plus élevé, depuis le terminal MT_{G0} suit des étapes similaires aux étapes E4 et E5 pour que le terminal MT_{G0} émette des données à débit plus élevé dans un sous-canal de trafic disponible adapté à ce débit dans les trames montantes et réservé pour le groupe G0 et une étape similaire à l'étape E2 pour que la station de base BS diffuse les données au débit plus élevé dans un sous-canal de trafic disponible adapté à ce débit dans les trames descendantes. Le changement de débit de sous-canal, ou la sélection d'un débit plus élevé de sous-canal pour que le terminal mobile MT_{G0} reçoive simultanément en multidiffusion par exemple des images ou une séquence vidéo et de la voix transmises par un autre terminal du groupe G0 dans les trames descendantes, est décidé par l'usager du terminal MT_{G0} à la suite d'instructions qu'il a reçues.

A l'étape E6, le gestionnaire GGT constate qu'aucun terminal mobile MT_{G0} du groupe G0 n'est actif et donc à l'écoute d'au moins un sous-canal réservé pour le groupe G0. L'étape E6 peut être antérieure à l'étape E1 si aucun terminal mobile du groupe G0 ne s'est signalé au gestionnaire GGT, ou être postérieure à l'étape E5 si tous les terminaux mobiles du groupe G0 sont transférés vers une ou plusieurs autres cellules du réseau RR, ou bien ont leur fonctionnement arrêté. A l'étape E7, le gestionnaire GGT commande via le module de priorité MP l'allocateur AR pour que les sous-canaux de trafic réservés pour le groupe G0 dans les zones ZMC_{DL} et ZMC_{DL} des trames TR_{DL} et TR_{UL} soient temporairement disponibles pour une allocation en priorité aux autres groupes G1 et G2. Par exemple à l'étape E8, un terminal mobile MT_{G1} membre du groupe G1 décide de transmettre des données nécessitant un débit élevé qui est supérieur au débit de tout premier sous-canal réservé pour le groupe G1 dans les trames montantes, ou éventuellement à la somme des débits de ces sous-canaux, et qui est au plus égal au débit de l'un des sous-canaux réservés pour le premier groupe G0, ou éventuellement au plus égal à la somme des débits des sous-canaux réservés pour le premier groupe G0. Le gestionnaire GGT ayant reçu une requête de ressource de débit élevé RQA du terminal mobile MT_{G1} autorise l'allocateur AR à allouer temporairement à ce terminal un ou plusieurs sous-canaux réservés pour le groupe G0 dans les trames montantes pour émettre les données à débit élevé vers la station de base BS et à allouer temporairement au groupe G1 un ou plusieurs sous-canaux réservés pour le groupe G0 dans les trames descendantes pour retransmettre en multidiffusion les données à débit élevé vers les autres terminaux mobiles du groupe G1, selon une procédure similaire aux étapes E4 et E5. Par exemple, les données à débit élevé sont relatives à l'image d'une carte sur laquelle le terminal MT_{G1} est localisé, ou à une séquence vidéo d'une scène prise par le terminal MT_{G1}.

A l'étape E7, le gestionnaire GGT constate qu'aucun terminal des autres groupes G1 et G2 n'a besoin de ressources supplémentaires ou les groupes G1 et G2 sont inactifs. A l'étape E9, le gestionnaire GGT communique avec le gestionnaire GTP pour que celui-ci identifie éventuellement un ou plusieurs liens de communication pour des terminaux mobiles de faible priorité MT_{P} dont les besoins en ressources ne peuvent être satisfaits dans au moins l'une des zones ZP_{DL} et ZP_{UL} des trames. En d'autres termes, par exemple la première zone ZP_{DL} dans les trames TR_{DL} est indisponible pour qu'une portion de celle-ci soit allouée à des données de trafic à émettre vers un terminal mobile MT_{P}. A l'étape E10, le gestionnaire GGT commande sous la surveillance du gestionnaire GTP l'allocateur AR via le module de priorité MP pour que l'allocateur alloue temporairement en seconde priorité un ou plusieurs sous-canaux réservés pour le groupe G0 dans l'une ou les deux zones ZMC_{DL} et ZMC_{UL} à un ou plusieurs liens de communication avec des terminaux mobiles de faible priorité MT_{P} en fonction des besoins insatisfaits en ressources d'applications dans ces terminaux de faible priorité et/ou d'applications dans la station de base pour des liens avec ces terminaux de faible priorité.

Les ressources réservées pour un groupe de mission critique dans les zones ZMC_{DL} et ZMC_{UL} sont ainsi allouées par ordre de priorité programmable dans le module MP d'abord à ce groupe, puis à l'un des autres groupes, et enfin à un ou plusieurs terminaux mobiles de faible priorité MT_{P}. Le module de priorité associe à chaque sous-canal alloué d'un groupe un indice de priorité courant afin de le comparer à l'indice de priorité d'un groupe ou d'un terminal MT_{P} ayant des besoins en débit afin de décider si l'allocation demandée à l'étape E8 ou E10 peut être autorisée.

Les caractéristiques précédentes relatives à la répartition des blocs de ressources dans les trames et particulièrement des blocs de ressources par groupes dans les zones ZMC_{DL} et ZMC_{UL} et aux priorités associées aux différents types de terminaux mobiles assurent que les membres de chaque groupe peuvent accéder rapidement en priorité et à tout instant à des ressources radio qui sont réservées pour le groupe.

Pendant l'allocation temporaire d'un ou de plusieurs sous-canaux réservés pour le groupe G0 à un ou plusieurs autres groupes G1 et G2 ou à un ou plusieurs terminaux mobiles de faible priorité MT_{P}, le gestionnaire GGT surveille en permanence toute activité du groupe G0 à l'étape E6. Le gestionnaire GGT arrête l'allocation temporaire à la prochaine réinitialisation d'allocation dès que celui-ci reçoit l'attachement d'au moins un terminal mobile MT_{G0} du groupe G0 à la station de base BS signalé via le champ de signalisation SGMC_{UL} d'une trame montante à l'étape E2, de manière à rendre entièrement disponibles pour le groupe G0 les sous-canaux qui lui sont réservés.

Selon un premier exemple dans les trames descendantes TR_{DL}, un premier bloc de ressources, deux deuxièmes blocs de ressources et trois troisièmes blocs dans chaque trame descendante TR_{DL}, ou bien en variante un premier bloc de ressources avec une périodicité d'allocation de bloc d'une période de trame TR_{DL} sur six, un deuxième bloc de ressources avec une périodicité d'allocation de bloc d'une période de trame TR_{DL} sur trois et un troisième bloc de ressources avec une périodicité d'allocation de bloc d'une période de trame TR_{DL} sur deux, définissent respectivement des premier, deuxième et troisième sous-canaux multiplexés réservés pour le groupe de mission critique G0 correspondant à des débits de source D, 2D et 3D exprimés en kbit/s, pour transmettre respectivement de la voix, des images et des séquences vidéo. Le débit de source D est par exemple égal à 64 kbit/s. Si seulement le premier sous-canal est occupé, les deuxième et troisième sous-canaux peuvent être alloués temporairement en priorité à au moins l'un des autres groupes G1 et G2 dont les sous-canaux sont déjà occupés et qui requiert plus de ressources pour diffuser par exemple des photos ou des séquences vidéo avec une définition élevée. Si le deuxième sous-canal avec un débit 2D réservé pour le groupe G0 n'est alloué à aucun groupe de mission critique, ce deuxième sous-canal peut être alloué temporairement à des liens descendants attachés à deux terminaux mobiles de plus faible priorité MT_{P} pour leur transmettre de la voix.

Selon un deuxième exemple, les débits de source D, 2D et 3D sont assurés pour le groupe G0 en lui réservant moins de ressources dans les trames descendantes TR_{DL} que selon le premier exemple grâce à des divisions d'un troisième sous-canal réservé au débit de source 3D en fonction des besoins variables en ressource du groupe G0. Un premier sous-canal avec le débit D correspond à un premier bloc de ressources prédéterminé parmi les trois blocs de ressources réservés pour le troisième sous-canal au débit 3D dans chaque trame descendante TR_{DL}, ou bien selon la variante, à un premier bloc de ressources avec une périodicité d'allocation de bloc d'une période de trame TR_{DL} sur six et sélectionné parmi les trois blocs de ressources réservés pour le troisième sous-canal au débit 3D dans six trames consécutives TR_{DL}. Un deuxième sous-canal avec le débit 2D correspond à deux deuxièmes blocs de ressources sélectionnés parmi les trois blocs de ressources réservés pour le sous-canal au débit 3D dans chaque trame descendante TR_{DL}, ou bien selon la variante, à deux deuxièmes bloc de ressources ayant chacun une périodicité d'allocation de bloc d'une période de trame TR_{DL} sur six et sélectionnés parmi les trois blocs de ressources réservés pour le sous-canal au débit 3D dans six trames consécutives TR_{DL}. Dans ce deuxième exemple si les premiers blocs de ressources sont distincts des deuxièmes blocs de ressources, la voix et des images peuvent être diffusées simultanément à travers les premier et deuxième sous-canaux multiplexés, et le troisième sous-canal correspondant au débit de source 3D ne peut être alloué que sans allocation d'au moins l'un des premier et deuxième sous-canaux.

Selon une variante du deuxième exemple dans les trames descendantes ou montantes, trois premiers sous-canaux avec le débit D sont réservés pour le groupe G0. Un deuxième sous-canal avec le débit de source 2D est alloué en agrégeant deux des trois premiers sous-canaux. Un troisième sous-canal avec le débit de source 3D est alloué en agrégeant les trois premiers sous-canaux. Les identificateurs de l'un des premiers sous-canaux et des deuxième et troisième sous-canaux sont seulement accessibles par les terminaux.

Pour un mode de diffusion radio simultané ("simulcast" en anglais), le gestionnaire de groupe GGT peut comprendre un module de synchronisation pour synchroniser la transmission de contenu dans un ou plusieurs sous-canaux réservés pour un groupe dans les trames descendantes TR_{DL} avec la transmission du même contenu dans un ou plusieurs sous-canaux réservés pour le groupe dans les trames descendantes émises par d'autres stations de base. Dans cette réalisation, la portion de la zone de ressources ZMC_{DL} de chaque trame TR_{DL} réservé pour le groupe précité est divisée en une première sous-zone réservée pour le mode de diffusion simultané et une deuxième sous-zone réservée pour le mode de diffusion normal non simultané. Aucun bloc de ressources dans la première sous-zone ne peut être alloué à des flux de données en mode de diffusion normal non simultané.

Selon une deuxième réalisation, le réseau de radiocommunication à large bande RR est basé sur la technologie connue WiMAX mobile ("Worldwide interoperability for Microwave Access" en anglais) avec une largeur de bande ΔF de quelques dizaines de GHz et une transmission par exemple en mode semi-duplex TDD et des débits inférieurs à 75 Mbit/s pour les liens descendants et inférieurs à 25 Mbit/s pour les liens montants. La bande ΔF est par exemple de 20 MHz sur NSP_{ΔF} = 2048 sous-porteuses. Les trames descendantes TR_{DL} et montantes TR_{UL} sont du type à accès OFDMA. Un bloc de ressources BR_{DL}, BR_{UL} alloué à des données d'un terminal mobile et des symboles de pilote d'un lien descendant DL comprend 2 clusters chacun ayant 4 symboles de pilote et s'étalant sur 14 sous-porteuses contigües de largeur δf = 10,94 kHz sélectionnées dans la bande ΔF, soit NSP_{BR} = 28, et sur une fente temporelle commune de NSY_{BR} = 2 périodes de symboles chacune de Ts = 102,9 µs, y compris avec un temps de garde Ts/8, et NSP_{ΔF} = 28 sous-porteuses. La trame comprend 20 fentes temporelles et a une durée de 10 ms. Par exemple, un bloc de ressources de lien montant BR_{UL} comprend six tuiles chacune ayant 4 symboles de pilote et s'étalant sur 4 sous-porteuses sélectionnées dans la bande ΔF, soit NSP_{BR} = 24, de largeur δf = 10,94 kHz et sur une fente temporelle commune de NSY_{BR} = 3 périodes de symboles chacune de Ts = 102,9 µs, y compris avec un temps de garde de Ts/8.

Une trame descendante TR_{DL} et une trame montante TR_{UL} associées à une cellule d'une station de base de l'invention sont séparées par un intervalle de garde et constituent des sous-trames d'une trame composite ayant une durée de 5 ms. Par exemple, la trame descendante TR_{DL} s'étale sur un nombre de périodes de symbole supérieur à celui de la trame de lien montant.

L'invention décrite concerne un procédé et une station de base pour allouer des ressources radio. Selon une implémentation, les étapes du procédé de l'invention sont déterminées par les instructions d'un programme d'ordinateur incorporé dans la station de base. Le programme apte à être mis en oeuvre dans la station de base de l'invention comporte des instructions de programme qui, lorsque ledit programme est exécuté dans la station de base dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans la station de base via un réseau de communication, comme internet.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

## Revendications

1. Procédé dans une station de base (BS) pour allouer des blocs de ressources radio (BR_{DL}, BR_{UL}) à des terminaux mobiles dans des trames descendantes (TR_{DL}) émises par la station de base et dans des trames montantes (TR_{UL}) reçues des terminaux mobiles, les blocs de ressources étant répartis en temps et en fréquence dans les trames, **caractérisé en ce qu'**il comprend :
- une configuration (E0) de chaque trame descendante (TR_{DL}) en des première et deuxième zones (ZP_{DL}, ZMC_{DL}) réservées pour des données respectivement à émettre vers des premiers et deuxièmes terminaux mobiles (MT_{P}, MT_{G0}) et de chaque trame montante (TR_{UL}) en des première et deuxième zones (ZP_{UL}, ZMC_{UL}) réservées pour des données respectivement à recevoir des premiers et deuxièmes terminaux,
- une allocation (EP) de blocs de ressources dans les premières zones (ZP_{DL}, ZP_{UL}) des trames descendantes et montantes partagée entre des données à émettre vers et recevoir des premiers terminaux mobiles (MT_{P}), les positions d'un bloc de ressources alloué à des données à émettre vers un premier terminal et d'un bloc de ressources alloué à des données à recevoir du premier terminal étant variables dans les premières zones,
ledit procédé étant **caractérisé en ce qu'**il comporte :
- une configuration (E0) de la deuxième zone (ZMC_{DL}) de chaque trame descendante (TR_{DL}) en des premiers sous-canaux réservés pour des données à émettre respectivement vers des groupes (G0, G1, G2) de deuxièmes terminaux mobiles (MT_{G0}, MT_{G1}, MT_{G2}), les premiers sous-canaux ayant des débits prédéterminés et étant constitués chacun par au moins un bloc de ressources ayant une position prédéterminée dans la deuxième zone des trames descendantes, et une configuration de la deuxième zone (ZMC_{DL}) de chaque trame montante (TR_{UL}) en des deuxièmes sous-canaux réservés pour des données à recevoir respectivement des groupes de deuxièmes terminaux, les deuxièmes sous-canaux ayant des débits prédéterminés et étant constitués chacun par au moins un bloc de ressources ayant une position prédéterminée dans la deuxième zone des trames montantes,
- une allocation (E2) des premiers sous-canaux en priorité à des données à émettre respectivement vers les groupes (G0, G1, G2) de deuxièmes terminaux, et
- une allocation (E5) d'un deuxième sous-canal réservé à un groupe en priorité à des données à recevoir de l'un des deuxièmes terminaux (MT_{G0}, MT_{G1}, MT_{G2}) du groupe ;
des champs de signalisation (SGMC_{DL}, SGMC_{UL}) au début des deuxièmes zones (ZMC_{DL}, ZMC_{DL}) des trames descendantes et montantes (TR_{DL}, TR_{UL}) étant alloués à la signalisation des liens descendants et montants associés aux groupes (G0, G1, G2) et à l'ordonnancement des blocs de ressources (BRG_{DL}, BRG_{UL}) des sous-canaux descendants et montants associés respectivement aux groupes dans les trames.

2. Procédé selon la revendication 1, comprenant une réservation (E0) de premiers sous-canaux ayant des débits prédéterminés différents et constitués respectivement par des blocs de ressources ayant des positions prédéterminées dans la deuxième zone (ZMC_{DL}) des trames descendantes (TR_{DL}) pour un premier (G0) des groupes de deuxièmes terminaux mobiles, et une allocation (E2) d'un premier sous-canal en priorité à des données à émettre avec au plus le débit du premier sous-canal vers le premier groupe.

3. Procédé selon la revendication 2, comprenant lorsque (E7) le débit de données à émettre vers les terminaux mobiles (MT_{GL}) d'un deuxième groupe (G1) est supérieur au débit de tout premier sous-canal réservé pour le deuxième groupe et au plus égal au débit de l'un desdits premiers sous-canaux réservés pour le premier groupe (G0), une allocation temporaire (E8) dudit un premier sous-canal aux données à émettre vers les terminaux mobiles (MT_{G1}) dudit deuxième groupe (G1) tant qu'aucune donnée n'est à émettre (E6) vers le premier groupe (G0) dans ledit un premier sous-canal.

4. Procédé selon la revendication 2 ou 3, comprenant lorsque (E9) la première zone (ZP_{DL}) dans les trames descendantes (TR_{DL}) est indisponible pour qu'une portion de celle-ci soit allouée à des données à émettre vers un premier terminal mobile (MT_{P}), une allocation temporaire (E10) de l'un desdits premiers sous-canaux aux données à émettre vers le premier terminal mobile (MT_{P}) tant qu'aucune donnée n'est à émettre (E6) vers les terminaux mobiles (MT_{G0,} MT_{G1}, MT_{G2}) des groupes (G0, G1, G2) dans ledit un premier sous-canal.

5. Procédé selon l'une des revendications 2 à 4, comprenant une réservation (E0) de deuxièmes sous-canaux ayant des deuxièmes débits prédéterminés différents et constitués respectivement par des blocs de ressources ayant des positions prédéterminées dans la deuxième zone (ZMC_{UL}) des trames montantes (TR_{UL}) pour le premier groupe (G0), et une allocation (E5) d'un deuxième sous-canal en priorité à des données à recevoir avec au plus le débit du premier sous-canal de l'un des terminaux mobiles (MT_{G0}) du premier groupe.

6. Procédé selon la revendication 5, comprenant lorsque (E7) le débit de données à recevoir de l'un des terminaux mobiles (MT_{GL}) d'un deuxième groupe (G1) est supérieur au débit de tout sous-canal réservé pour le deuxième groupe et au plus égal au débit de l'un desdits deuxièmes sous-canaux réservés pour le premier groupe (G0), une allocation temporaire (E8) dudit un deuxième sous-canal aux données à recevoir dudit un terminal mobile (MT_{G1}) du deuxième groupe (G1) tant qu'aucune donnée n'est à recevoir (E6) du premier groupe (G0) dans ledit un deuxième sous-canal.

7. procédé selon la revendication 5 ou 6, comprenant lorsque (E9) la première zone (ZP_{UL}) dans les trames montantes (TR_{UL}) est indisponible pour qu'une portion de celle-ci soit allouée à des données à recevoir d'un premier terminal mobile (MT_{P}), une allocation temporaire (E10) de l'un desdits deuxièmes sous-canaux aux données à recevoir du premier terminal mobile (MT_{P}) tant qu'aucune donnée n'est à recevoir (E6) des terminaux mobiles, (MT_{G0}, MT_{G1}, MT_{G2}) des groupes (G0, G1, G2) dans ledit un deuxième sous-canal.

8. procédé selon l'une des revendications 5 à 7, selon lequel un deuxième sous-canal est alloué aux données à recevoir d'un terminal mobile (MT_{G0}) du premier groupe lorsque la station de base (BS) a reçu au moins l'une de plusieurs requêtes d'allocation (RQA) émises dans un champ de signalisation (SG_{UL}) des trames montantes (TR_{UL}) par ledit un terminal mobile (MT_{G0}) du premier groupe.

9. Procédé selon l'une des revendications 2 et 3, ou 5 et 6, selon lequel des sous-canaux dans des trames montantes ou descendantes réservés pour un groupe (G0) de terminaux mobiles ont des débits multiples entiers d'un débit minimal de l'un des sous-canaux, et un sous-canal réservé pour ce groupe ayant un débit immédiatement supérieur à celui d'un autre sous-canal réservé pour ce groupe comprend les blocs de ressources réservés de l'autre sous-canal.

10. Combinaison de trames descendantes (TR_{DL}) à émettre par une station de base (BS) vers des terminaux mobiles et de trames montantes (TR_{UL}) à recevoir des terminaux mobiles par la station de base, des blocs de ressources étant répartis en temps et en fréquence dans les trames, **caractérisée en ce qu'**elle comprend
dans chaque trame descendante (TR_{DL}), des première et deuxième zones (ZP_{DL}, ZMC_{DL}) réservées pour des données respectivement à émettre vers des premiers et deuxièmes terminaux mobiles (MT_{P}, MT_{G0}) et dans chaque trame montante (TR_{UL}) des première et deuxième zones (ZP_{UL}, ZMC_{UL}) réservées pour des données respectivement à recevoir des premiers et deuxièmes terminaux,
dans les premières zones (ZP_{DL}, ZP_{UL}) des trames descendantes et montantes, des blocs de ressources à allouer de manière partagée entre des données à émettre vers et à recevoir des premiers terminaux mobiles (MT_{P}), les positions d'un bloc de ressources à allouer à des données à émettre vers un premier terminal et d'un bloc de ressources à allouer à des données à recevoir du premier terminal étant variables dans les premières zones,
dans la deuxième zone (ZMC_{DL}) de chaque trame descendante (TR_{DL}), des premiers sous-canaux réservés pour des données à émettre respectivement vers des groupes (G0, G1, G2) de deuxièmes terminaux mobiles (MT_{G0}, MT_{G1}, MT_{G2}), les premiers sous-canaux ayant des débits prédéterminés et étant constitués chacun par au moins un bloc de ressources ayant une position prédéterminée dans la deuxième zone des trames descendantes, et une configuration de la deuxième zone (ZMC_{DL}) de chaque trame montante (TR_{UL}) en des deuxièmes sous-canaux réservés pour des données à recevoir respectivement des groupes de deuxièmes terminaux, les deuxièmes sous-canaux ayant des débits prédéterminés et étant constitués chacun par au moins un bloc de ressources ayant une position prédéterminée dans la deuxième zone des trames montantes,
des premiers sous-canaux à allouer en priorité à des données à émettre respectivement vers les groupes (G0, G1, G2) de deuxièmes terminaux, et
un deuxième sous-canal réservé à un groupe en priorité à des données à recevoir de l'un des deuxièmes terminaux (MT_{G0}, MT_{G1}, MT_{G2}) du groupe ;
des champs de signalisation (SGMC_{DL}, SGMC_{UL}) au début des deuxièmes zones (ZMC_{DL}, ZMC_{DL}) des trames descendantes et montantes (TR_{DL}, TR_{UL}) à allouer à la signalisation des liens descendants et montants associés aux groupes (G0, G1, G2) et à l'ordonnancement des blocs de ressources (BRG_{DL}, BRG_{UL}) des sous-canaux descendants et montants associés respectivement aux groupes dans les trames.

11. Station de base (BS) apte à allouer des blocs de ressources radio (BR_{DL}, BR_{UL}) à des terminaux mobiles dans des trames descendantes (TR_{DL}) à émettre par la station de base et dans des trames montantes (TR_{UL}) à recevoir des terminaux mobiles, les blocs de ressources étant répartis en temps et en fréquence dans les trames, **caractérisée en ce qu'**elle comprend
un moyen (GGT) pour configurer chaque trame descendante (TR_{DL}) en des première et deuxième zones (ZP_{DL}, ZMC_{DL}) réservées pour des données respectivement à émettre vers des premiers et deuxièmes terminaux mobiles (MT_{P}, MT_{G0}) et de chaque trame montante (TR_{UL}) en des première et deuxième zones (ZP_{UL}, ZMC_{UL}) réservées pour des données respectivement à recevoir des premiers et deuxièmes terminaux,
un moyen (GTP, AR) pour allouer des blocs de ressources dans les premières zones (ZP_{DL}, ZP_{UL}) des trames descendantes et montantes partagée entre des données à émettre vers et recevoir des premiers terminaux mobiles (MT_{P}), les positions d'un bloc de ressources alloué à des données à émettre vers un premier terminal et d'un bloc de ressources alloué à des données à recevoir du premier terminal étant variables dans les premières zones,
un moyen pour configurer la deuxième zone (ZMC_{DL}) de chaque trame descendante (TR_{DL}) en des premiers sous-canaux réservés pour des données à émettre respectivement vers des groupes (G0, G1, G2) de deuxièmes terminaux mobiles (MT_{G0}, MT_{G1}, MT_{G2}), les premiers sous-canaux ayant des débits prédéterminés et étant constitués chacun par au moins un bloc de ressources ayant une position prédéterminée dans la deuxième zone des trames descendantes, et une configuration de la deuxième zone (ZMC_{DL}) de chaque trame montante (TR_{UL}) en des deuxièmes sous-canaux réservés pour des données à recevoir respectivement des groupes de deuxièmes terminaux, les deuxièmes sous-canaux ayant des débits prédéterminés et étant constitués chacun par au moins un bloc de ressources ayant une position prédéterminée dans la deuxième zone des trames montantes,
un moyen pour allouer des premiers sous-canaux en priorité à des données à émettre respectivement vers les groupes (G0, G1, G2) de deuxièmes terminaux, et
un moyen pour allouer un deuxième sous-canal réservé à un groupe en priorité à des données à recevoir de l'un des deuxièmes terminaux (MTG₀, MT_{G1}, MT_{G2}) du groupe ;
un moyen pour allouer des champs de signalisation (SGMC_{DL}, SGMC_{UL}) au début des deuxièmes zones (ZMC_{DL}, ZMC_{UL}) des trames descendantes et montantes (TR_{DL}, TR_{UL}) à la signalisation des liens descendants et montants associés aux groupes (G0, G1, G2) et à l'ordonnancement des blocs de ressources (BRG_{DL}, BRG_{UL}) des sous-canaux descendants et montants associés respectivement aux groupes dans les trames.

12. Réseau de radiocommunication à large bande (RR) comprenant des stations de base et des terminaux mobiles (MS), **caractérisé en ce que** chaque station de base est conforme à la revendication 11.

13. Programme d'ordinateur apte à être mis en oeuvre dans une station de base, ledit programme étant **caractérisé en ce qu'**il comprend des instructions qui, lorsque le programme est exécuté dans la station de base, réalisent le procédé selon l'une des revendications 1 à 9.

## Patentansprüche

1. Verfahren in einer Basisstation (BS) zum Zuordnen von Funk-Ressourcenblöcken (BR_{DL}, BR_{UL}) zu mobilen Terminals in absteigenden Übertragungsrastern (TR_{DL}), die von der Basisstation ausgegeben werden, und in aufsteigenden Übertragungsrastern (TR_{UL}), die von mobilen Terminals empfangen werden, wobei die Ressourcenblöcke in der Zeit und in der Frequenz in den Übertragungsnetzen verteilt sind, **dadurch gekennzeichnet, dass** es umfasst:
- eine Konfiguration (E0) jedes absteigenden Übertragungsrasters (TR_{DL}) in erste und zweite Bereiche (ZP_{DL}, ZMC_{DL}), die für Daten reserviert sind, die jeweils zu ersten und zweiten mobilen Terminals (MT_{P}, MT_{G0}) zu senden sind, und von jedem aufsteigenden Übertragungsraster (TR_{UL}) in erste und zweite Bereiche (ZP_{UL}, ZMC_{UL}), die für Daten reserviert sind, die jeweils von ersten und zweiten Terminals zu empfangen sind;
- eine Zuordnung (EP) von Ressourcenblöcken in den ersten Bereichen (ZP_{DL}, ZP_{UL}) der absteigenden und aufsteigenden Übertragungsraster, die zwischen Daten geteilt sind, die an erste mobile Terminals (MT_{P}) zu senden und davon zu empfangen sind, wobei die Positionen eines Ressourcenblocks, der Daten zugeordnet ist, die an ein erstes Terminal zu senden sind, und eines Ressourcenblocks, der Daten zugeordnet ist, die von dem ersten Terminal zu empfangen sind, in den ersten Bereichen variabel sind,
wobei das genannte Verfahren **dadurch gekennzeichnet ist, dass** es umfasst:
- eine Konfiguration (E0) des zweiten Bereichs (ZMC_{DL}) jedes absteigenden Übertragungsrasters (TRDL) in erste Unterkanäle, die für Daten reserviert sind, die jeweils an Gruppen (G0, G1, G2) von zweiten mobilen Terminals (MT_{G0}, MT_{G1}, MTG₂) zu senden sind, wobei die ersten Unterkanäle vorbestimmte Durchsätze haben und jeweils durch wenigstens einen Ressourcenblock gebildet sind, der eine vorbestimmte Position in dem zweiten Bereich der absteigenden Übertragungsraster hat, und eine Konfiguration des zweiten Bereichs (ZMC_{DL}) jedes aufsteigenden Übertragungsrasters (TR_{UL}) in zweiten Unterkanälen, die für Daten reserviert sind, die jeweils von den Gruppen von zweiten Terminals zu empfangen sind, wobei die zweiten Unterkanäle vorbestimmte Durchsätze haben und jeweils durch wenigstens einen Ressourcenblock gebildet sind, der eine vorbestimmte Position in dem zweiten Bereich der aufsteigenden Übertragungsraster hat,
- eine Zuordnung (E2) der ersten Unterkanäle vorrangig für Daten, die jeweils zu den Gruppen (G0, G1, G2) von zweiten Terminals zu senden sind, und
- eine Zuordnung (E5) eines zweiten Unterkanals, der vorrangig einer Gruppe von Daten, die von einem der zweiten Terminals (MT_{GO}, MTG_{1,} MTG₂) der Gruppe zu empfangen sind, reserviert ist;
wobei Signalgebungsfelder (SGMC_{DL}, SGMC_{UL}) zu Beginn der zweiten Bereiche (ZMC_{DL}, ZMC_{DL}) der absteigenden und aufsteigenden Übertragungsraster (TR_{DL}, TR_{UL}) der Signalgebung der absteigenden und aufsteigenden Verbindungen zugeordnet sind, die den Gruppen (G0, G1, G2) und der Reihung der Ressourcenblöcke (BRG_{DL}, BRG_{UL}) der absteigenden und aufsteigenden Unterkanäle zugeordnet sind, die jeweils den Gruppen in den Übertragungsrastern zugeordnet sind.

2. Verfahren gemäß Anspruch 1, umfassend eine Reservierung (E0) erster Unterkanäle mit vorbestimmten unterschiedlichen Durchsätzen und die jeweils durch Ressourcenblöcke gebildet sind, die vorbestimmte Positionen in dem zweiten Bereich (ZMC_{DL}) der absteigenden Übertragungsraster (TR_{DL}) für eine erste (G0) der Gruppen aus zweiten mobilen Terminals haben, und eine Zuordnung (E2) eines ersten Unterkanals vorrangig zu Daten, die mit höchstens dem Durchsatz des ersten Unterkanals zu der ersten Gruppe zu senden sind.

3. Verfahren gemäß Anspruch 2, umfassend, wenn (E7) der Durchsatz der an die mobilen Terminals (MT_{G1}) einer zweiten Gruppe (G1) zu sendenden Daten höher ist als der Durchsatz des allerersten Unterkanals, der für die zweite Gruppe reserviert ist und höchstens gleich dem Durchsatz einer der ersten Unterkanäle, die für die erste Gruppe (G0) reserviert sind, eine vorübergehende Zuordnung (E8) des genannten ersten Unterkanals für die an die mobilen Terminals (MT_{G1}) der genannten zweite Gruppe (G1) zu sendenden Daten, solange keine Daten an die erste Gruppe (G0) in dem genannten ersten Unterkanal zu senden (E6) sind.

4. Verfahren gemäß Anspruch 2 oder 3, umfassend, wenn (E9) der erste Bereich (ZP_{DL}) in den absteigenden Übertragungsrastern (TR_{DL}) für einen Abschnitt desselben nicht verfügbar ist, Daten zugeordnet wird, die an ein erstes mobiles Terminal (MT_{P}) zu senden sind, eine vorübergehende Zuordnung (E10) einer der genannten ersten Unterkanäle zu den Daten, die an das erste mobile Terminal (MT_{P}) zu senden sind, solange keine Daten an die mobilen Terminals (MT_{G0}, MT_{G1,} MT_{G2}) der Gruppen (G0, G1, G2) in dem genannten einen ersten Unterkanal zu senden sind.

5. Verfahren gemäß einem der Ansprüche 2 bis 4, umfassend eine Reservierung (E0) von zweiten Unterkanälen mit zweiten vorbestimmten unterschiedlichen Durchsätzen und die jeweils durch Ressourcenblöcke mit vorbestimmten Positionen in dem zweiten Bereich (ZMC_{UL}) der aufsteigenden Übertragungsraster (TR_{UL}) für die erste Gruppe (G0) gebildet sind, und eine Zuordnung (E5) eines zweiten Unterkanals vorranging für zu empfangende Daten mit höchstens dem Durchsatz des ersten Unterkanals eines der mobilen Terminals (MT_{G0}) der ersten Gruppe.

6. Verfahren gemäß Anspruch 5, umfassend, wenn (E7) der Durchsatz der zu empfangenden Daten eines der mobilen Terminals (MT_{G1}) einer zweiten Gruppe (G1) höher als der Durchsatz jedes Unterkanals, der für die zweite Gruppe reserviert ist, und höchstens gleich dem Durchsatz eines der genannten zweiten Unterkanäle, die für die erste Gruppe (G0) reserviert sind, eine vorübergehende Zuordnung (E8) des genannten eines zweiten Unterkanals zu den zu empfangenden Daten des genannten einen mobilen Terminals (MT_{G1}) der zweiten Gruppe (G1) solange keine Daten von der ersten Gruppe (G0) in dem genannten zweiten Unterkanal zu empfangen sind (E6), ist.

7. Verfahren gemäß Anspruch 5 oder 6, umfassend, wenn (E9) der erste Bereich (ZP_{UL}) in den aufsteigenden Übertragungsrastern (TR_{UL}) nicht verfügbar ist, damit ein Abschnitt desselben zu empfangenden Daten eines ersten mobilen Terminals (MT_{P}) zugeordnet wird, eine vorübergehende Zuordnung (E10) eines der genannten zweiten Unterkanäle zu den zu empfangenden Daten des ersten mobilen Terminals (MT_{P}), solange keine Daten von den mobilen Terminals (MT_{GO}, MT_{G1}, MT_{G2}) der Gruppen (G0, G1, G2) in dem genannten einen zweiten Unterkanal zu empfangen sind.

8. Verfahren gemäß einem der Ansprüche 5 bis 7, gemäß dem ein zweiter Unterkanal den zu empfangenden Daten eines mobilen Terminals (MT_{GO}) der ersten Gruppe zugeordnet wird, wenn die Basisstation (BS) wenigstens eine der mehreren Zuordnungsanfragen (RQA) empfangen hat, die in einem Signalgebungsfeld (SG_{UL}) der aufsteigenden Übertragungsraster (TR_{UL}) durch das genannte eine mobile Terminal (MT_{G0}) der ersten Gruppe gesendet werden.

9. Verfahren gemäß irgendeinem der Ansprüche 2 und 3 oder 5 und 6, gemäß dem die Unterkanäle in den aufsteigenden oder absteigenden Übertragungsrastern, die für eine Gruppe (G0) von mobilen Terminals reserviert sind, ganze multiple Durchsätze eines Mindestdurchsatzes eines der Unterkanäle haben, und ein reservierter Unterkanal für diese Gruppe mit einem unverzüglich höheren Durchsatz als den eines anderen reservierten Unterkanals für diese Gruppe die reservierten Ressourcenblöcke des anderen Unterkanals umfasst.

10. Kombination aus absteigenden Übertragungsrastern (TR_{DL}), die durch eine Basisstation (BS) zu mobilen Terminals zu senden sind, und aufsteigenden Übertragungsrastern (TR_{UL}), die von mobilen Terminals durch die Basisstation zu empfangen sind, wobei Ressourcenblöcke in der Zeit und in der Frequenz in den Übertragungsrastern verteilt sind, **dadurch gekennzeichnet, dass** sie umfasst:
- in jedem absteigenden Übertragungsraster (TR_{DL}) erste und zweite reservierte Bereiche (ZP_{DL}, ZMC_{DL}) für jeweils an erste und zweite mobile Terminals (MT_{P}, MT_{G0}) zu sendende Daten und in jedem aufsteigenden Übertragungsraster (TR_{UL}) erste und zweite reservierte Bereiche (ZP_{UL}, ZMC_{UL}) für jeweils von den ersten und zweiten Terminals zu empfangenden Daten,
- in den ersten Bereichen (ZP_{DL}, ZP_{UL}) absteigende und aufsteigende Übertragungsraster, Ressourcenblöcke, die geteilt zwischen den Daten zuzuordnen sind, die an erste mobile Terminals (MT_{P}) zu senden und von ihnen zu empfangen sind, wobei die Positionen eines Ressourcenblocks, der Daten zuzuordnen ist, die an ein erstes Terminal zu übertragen sind, und eines Ressourcenblocks, der Daten zuzuordnen ist, die von dem ersten Terminal zu empfangen sind, in den ersten Bereichen variabel sind,
- in dem zweiten Bereich (ZMC_{DL}) jedes absteigenden Übertragungsrasters (TR_{DL}) erste reservierte Unterkanäle für Daten, die jeweils an Gruppen (G0, G1, G2) von zweiten mobilen Terminals (MT_{G0}, MT_{G1}, MT_{G2}) zu senden sind, wobei die ersten Unterkanäle vorbestimmte Durchsätze haben und jeder durch wenigstens einen Ressourcenblock gebildet sind, der eine vorbestimmte Position in dem zweiten Bereich der absteigenden Übertragungsraster hat, und eine Konfiguration des zweiten Bereichs (ZMC_{DL}) jedes aufsteigenden Übertragungsrasters (TR_{UL}) in zweite reservierte Unterkanäle für Daten, die jeweils von den Gruppen aus zweiten Terminals zu empfangen sind, wobei die zweiten Unterkanäle vorbestimmte Durchsätze haben und jeder durch wenigstens einen Ressourcenblock gebildet ist, der eine vorbestimmte Position in dem zweiten Bereich der aufsteigenden Übertragungsraster hat,
- erste Unterkanäle, die vorrangig Daten zuzuordnen sind, die jeweils an die Gruppen (G0, G1, G2) von zweiten Terminals zu senden sind, und
- einen zweiten reservierten Unterkanal für eine Gruppe vorrangig für Daten, die von einem der zweiten Terminals (MT_{G0}, MT_{G1,} MT_{G2}) der Gruppe zu empfangen sind;
- Signalgebungsfelder (SGMC_{DL}, SGMC_{UL}) zu Beginn der zweiten Bereiche (ZMC_{DL}, ZMC_{DL}) der absteigenden und aufsteigenden Übertragungsraster (TR_{CL}, TR_{UL}), die der Signalgebung der absteigenden und aufsteigenden Verbindungen zuzuordnen sind, die den Gruppen (G0, G1, G2) und der Reihung der Ressourcenblöcke (BRG_{DL}, BRG_{UL}) der absteigenden und aufsteigenden Unterkanäle zugeordnet sind, die jeweils den Gruppen in den Übertragungsrastern zugeordnet sind.

11. Basisstation (BS), die geeignet ist, Funk-Ressourcenblöcke (BR_{DL}, BR_{UL}) mobilen Terminals in absteigenden Übertragungsrastern (TR_{DL}), die von der Basisstation zu senden sind, und in aufsteigenden Übertragungsrastern (TR_{UL}), die von mobilen Terminals zu empfangen sind, zuzuordnen, wobei die Ressourcenblöcke in der Zeit und in der Frequenz in den Übertragungsrastern verteilt sind, **dadurch gekennzeichnet, dass** sie umfasst:
- ein Mittel (GGT) zum Konfigurieren jedes absteigenden Übertragungsrasters (TR_{DL}) in den ersten und zweiten reservierten Bereichen (ZP_{DL}, ZMC_{DL}) für Daten, die jeweils an erste und zweite mobile Terminals (MT_{P}, MT_{G0}) zu senden und von jedem aufsteigenden Übertragungsraster (TR_{UL}) in erste und zweite reservierte Bereiche (ZP_{UL}, ZMC_{UL}) für Daten, die jeweils von den ersten und zweiten Terminals zu empfangen sind,
- ein Mittel (GTP, AR) zum Zuordnen der Ressourcenblöcke in die ersten Bereiche (ZP_{DL}, ZP_{UL}) der absteigenden und aufsteigenden Übertragungsraster, die zwischen den Daten aufgeteilt sind, die an erste mobile Terminals (MT_{P}) zu senden und von ihnen zu empfangen sind, wobei die Positionen eines Ressourcenblocks, der Daten zugeteilt ist, die an ein erstes Terminal zu senden sind, und eines Ressourcenblocks, der Daten zugeteilt ist, die von dem ersten Terminal zu empfangen sind, in den ersten Bereichen variabel sind,
- ein Mittel zum Konfigurieren des zweiten Bereichs (ZMC_{DL}) jedes absteigenden Übertragungsrasters (TR_{DL}) in ersten reservierten Unterkanälen für Daten, die jeweils an Gruppen (G0, G1, G2) von zweiten mobilen Terminals (MT_{G0}, MT_{G1}, MT_{G2}) zu senden sind, wobei die ersten Unterkanäle vorbestimmte Durchsätze haben und jeder durch wenigstens einen Ressourcenblock gebildet ist, der eine vorbestimmte Position in dem zweiten Bereich der absteigenden Übertragungsraster hat, und eine Konfiguration des zweiten Bereichs (ZMC_{DL}) von jedem aufsteigenden Übertragungsraster (TR_{UL}) in zweite reservierte Unterkanäle für Daten, die jeweils von den Gruppen von zweiten Terminals zu empfangen sind, wobei die zweiten Unterkanäle vorbestimmte Durchsätze haben und jeder durch wenigstens einen Ressourcenblock gebildet ist, der eine vorbestimmte Position in dem zweiten Bereich der aufsteigenden Übertragungsraster hat,
- ein Mittel zum Zuordnen der ersten Unterkanäle vorrangig zu Daten, die jeweils an die Gruppen (G0, G1, G2) von zweiten Terminals zu senden sind, und
- ein Mittel zum Zuordnen eines zweiten reservierten Unterkanals zu einer Gruppe vorrangig zu Daten, die von einem der zweiten Terminals (MT_{G0}, MT_{G1}, MT_{G2}) der Gruppe zu empfangen sind;
- ein Mittel zum Zuordnen der Signalgebungsfelder (SGMC_{DL}, SGMC_{UL}) zu dem Beginn der zweiten Bereiche (ZMC_{DL}, ZMC_{DL}) der absteigenden und aufsteigenden Übertragungsraster (TR_{DL}, TR_{UL}) zu der Signalgebung der absteigenden und aufsteigenden Verbindungen, die den Gruppen (G0, G1, G2) und der Reihung der Ressourcenblöcke (BRG_{DL}, BRG_{UL}) der absteigenden und aufsteigenden Unterkanäle zugeordnet sind, die jeweils den Gruppen in den Übertragungsrastern zugeordnet sind.

12. Breitband-Funkkommunikationsnetz (RR), umfassend Basisstationen und mobile Terminals (MS), **dadurch gekennzeichnet, dass** jede Basisstation Anspruch 11 genügt.

13. Computerprogramm, das geeignet ist, in einer Basisstation umgesetzt zu werden, wobei das genannte Programm **dadurch gekennzeichnet ist, dass** es Anweisungen umfasst, die, wenn das Programm in der Basisstation ausgeführt wird, das Verfahren gemäß einem der Ansprüche 1 bis 9 realisieren.

## Claims

1. A method in a base station (BS) for allocating blocks of radio resources (BR_{DL}, BR_{UL}) to mobile terminals in downlink frames (TR_{DL}) transmitted by the base station and in uplink frames (TR_{UL}) received from the mobile terminals, the blocks of resources being time and frequency divided in the frames, **characterised in that** it comprises:
- configuring (E0) each downlink frame (TR_{DL}) into first and second areas (ZP_{DL}, ZMC_{DL}) reserved for data to be transmitted respectively to first and second mobile terminals (MT_{P}, MT_{G0}) and each uplink frame (TR_{UL}) into first and second areas (ZP_{UL}, ZMC_{UL}) reserved for data to be received respectively from the first and second terminals,
- allocating (EP) blocks of resources in the first areas (ZP_{DL}, ZP_{UL}) of the downlink and uplink frames shared between data to be transmitted to and received from the first mobile terminals (MT_{P}), the positions of a block of resources allocated to data to be transmitted to a first terminal and of a block of resources allocated to data to be received from the first terminal being variable in the first areas,
said method being **characterised in that** it includes:
- configuring (E0) the second area (ZMC_{DL}) of each downlink frame (TR_{DL}) into first sub-channels reserved for data to be transmitted respectively to groups (G0, G1, G2) of second mobile terminals (MT_{G0}, MT_{G1}, MT_{G2}), the first sub-channels having predetermined rates and each consisting in at least one block of resources having a predetermined position in the second area of downlink frames, and configuring the second area (ZMC_{DL}) of each uplink frame (TR_{UL}) into second sub-channels reserved for data to be received respectively from the groups of second terminals, the second sub-channels having predetermined rates and each consisting in at least one block of resources having a predetermined position in the second area of the uplink frames,
- allocating (E2) the first sub-channels as a priority to data to be transmitted respectively to the groups (G0, G1, G2) of second terminals, and
- allocating (E5) a second sub-channel reserved for a group as a priority to data to be received from one of the second terminals (MT_{G0}, MT_{G1}, MT_{G2}) of the group;
signalling fields (SGMC_{DL}, SGMC_{UL}) at the beginning of the second areas (ZMC_{DL}, ZMC_{DL}) of the downlink and uplink frames (TR_{DL}, TR_{UL}) being allocated to signalling downlinks and uplinks associated with the groups (G0, G1, G2) and to scheduling the blocks of resources (BRG_{DL}, BRG_{UL}) of the downlink and uplink sub-channels respectively associated with the groups in the frames.

2. The method according to claim 1, comprising reserving (E0) first sub-channels having different predetermined rates and respectively consisting in blocks of resources having predetermined positions in the second area (ZMC_{DL}) of the downlink frames (TR_{DL}) for a first one (G0) of the groups of second mobile terminals, and allocating (E2) a first sub-channel as a priority to data to be transmitted with at most the rate of the first sub-channel to the first group.

3. The method according to claim 2, comprising when (E7) the rate of data to be transmitted to the mobile terminals (MT_{G1}) of a second group (G1) is larger than the rate of any first sub-channel reserved for the second group and at most equal to the rate of one of said first sub-channels reserved for the first group (G0), temporarily allocating (E8) said one first sub-channel to data to be transmitted to the mobile terminals (MT_{G1}) of said second group (G1) as long as no datum is to be transmitted (E6) to the first group (G0) in said first sub-channel.

4. The method according to claim 2 or 3, comprising when (E9) the first area (ZP_{DL}) in the downlink frames (TR_{DL}) is unavailable for a portion thereof to be allocated to data to be transmitted to a first mobile terminal (MT_{P}), temporarily allocating (E10) one of said first sub-channels to the data to be transmitted to the first mobile terminal (MT_{P}) as long as no datum is to be transmitted (E6) to the mobile terminals (MT_{G0}, MT_{G1}, MT_{G2}) of the groups (G0, G1, G2) in said first sub-channel.

5. The method according to one of claims 2 to 4, comprising reserving (E0) second sub-channels having second different predetermined rates and respectively consisting in blocks of resources having predetermined positions in the second area (ZMC_{UL}) of the uplink frames (TR_{UL}) for the first group (G0), and allocating (E5) a second sub-channel as a priority to data to be received with at most the rate of the first sub-channel of one of the mobile terminals (MT_{G0}) of the first group.

6. The method according to claim 5, comprising when (E7) the rate of data to be received from one of the mobile terminals (MT_{G1}) of a second group (G1) is larger than the rate of any sub-channel reserved for the second group and at most equal to the rate of one of said second sub-channels reserved for the first group (G0), temporarily allocating (E8) said second sub-channel to the data to be received from said mobile terminal (MT_{G1}) of said second group (G1) as long as no datum is to be received (E6) from the first group (G0) in said second sub-channel.

7. The method according to claim 5 or 6, comprising when (E9) the first area (ZP_{UL}) in the uplink frames (TR_{UL}) is unavailable for a portion thereof to be allocated to data to be received from a first mobile terminal (MT_{P}), temporarily allocating (E10) one of said second sub-channels to the data to be received from the first mobile terminal (MT_{P}) as long as no datum is to be received (E6) from the mobile terminals (MT_{G0}, MT_{G1}, MT_{G2}) of the groups (G0, G1, G2) in said second sub-channel.

8. The method according to one of claims 5 to 7, wherein a second sub-channel is allocated to the data to be received from a mobile terminal (MT_{G0}) of the first group when the base station (BS) has received at least one of several allocating requests (RQA) transmitted in a signalling field (SG_{UL}) of the uplink frames (TR_{UL}) by said mobile terminal (MT_{G0}) of the first group.

9. The method according to one of claims 2 and 3, or 5 and 6, wherein sub-channels in uplink or downlink frames reserved for a group (G0) of mobile terminals have integer multiple rates of a minimum rate of one of the sub-channels, and one sub-channel reserved for this group having an immediately larger rate than the one of another sub-channel reserved for this group comprises the reserved blocks of resources of the other sub-channel.

10. A combination of downlink frames (TR_{DL}) to be transmitted by a base station (BS) to mobile terminals and of uplink frames (TR_{UL}) to be received from the mobile terminals by the base station, blocks of resources being time and frequency divided in the frames, **characterised in that** it comprises:
in each downlink frame (TR_{DL}), first and second areas (ZP_{DL}, ZMC_{DL}) reserved for data to be transmitted respectively to first and second mobile terminals (MT_{P}, MT_{G0}) and in each uplink frame (TR_{UL}) first and second areas (ZP_{UL}, ZMC_{UL}) reserved for data to be received respectively from the first and second terminals,
in the first areas (ZP_{DL}, ZP_{UL}) of the downlink and uplink frames, blocks of resources to be allocated in a shared way between data to be transmitted to and to be received from the first mobile terminals (MT_{P}), the positions of a block of resources to be allocated to data to be transmitted to a first terminal and of a block of resources to be allocated to data to be received from the first terminal being variable in the first areas,
in the second area (ZMC_{DL}) of each downlink frame (TR_{DL}), first sub-channels reserved for data to be transmitted respectively to groups (G0, G1, G2) of second mobile terminals (MT_{G0}, MT_{G1}, MT_{G2}), the first sub-channels having predetermined rates and each consisting in at least one block of resources having a predetermined position in the second area of downlink frames, and configuring the second area (ZMC_{DL}) of each uplink frame (TR_{UL}) into second sub-channels reserved for data to be received respectively from the groups of second terminals, the second sub-channels having predetermined rates and each consisting in at least one block of resources having a predetermined position in the second area of the uplink frames,
first sub-channels to be allocated as a priority to data to be transmitted respectively to the groups (G0, G1, G2) of second terminals, and
a second sub-channel reserved for a group as a priority for data to be received from one of the second terminals (MT_{G0}, MT_{G1}, MT_{G2}) of the group; signalling fields (SGMC_{DL}, SGMC_{UL}) at the beginning of the second areas (ZMC_{DL}, ZMC_{DL}) of the downlink and uplink frames (TR_{DL}, TR_{UL}) to be allocated to signalling downlinks and uplinks associated with the groups (G0, G1, G2) and to scheduling the blocks of resources (BRG_{DL}, BRG_{UL}) of the downlink and uplink sub-channels respectively associated with the groups in the frames.

11. A base station (BS) able to allocate blocks of radio resources (BR_{DL}, BR_{UL}) to mobile terminals in downlink frames (TR_{DL}) to be transmitted by the base station and in uplink frames (TR_{UL}) to be received from the mobile terminals, the blocks of resources being time and frequency divided in the frames, **characterised in that** it comprises
a means (GGT) for configuring each downlink frame (TR_{DL}) in first and second areas (ZP_{DL}, ZMC_{DL}) reserved for data to be transmitted respectively to first and second mobile terminals (MT_{P}, MT_{G0}) and each uplink frame (TR_{UL}) in first and second areas (ZP_{UL}, ZMC_{UL}) reserved for data to be received respectively from the first and second terminals,
a means (GTP, AR) for allocating blocks of resources in the first areas (ZP_{DL}, ZP_{UL}) of the downlink and uplink frames shared between data to be transmitted to and received from the first mobile terminals (MT_{P}), the positions of a block of resources allocated to data to be transmitted to a first terminal and of a block of resources allocated to data to be received from the first terminal being variable in the first areas,
a means for configuring the second area (ZMC_{DL}) of each downlink frame (TR_{DL}) into first sub-channels reserved for data to be transmitted respectively to groups (G0, G1, G2) of second mobile terminals (MT_{G0}, MT_{G1,} MT_{G2}), the first sub-channels having predetermined rates and each consisting in at least one block of resources having a predetermined position in the second area of the downlink frames, and configuring the second area (ZMC_{DL}) of each uplink frame (TR_{UL}) into second sub-channels reserved for data to be received respectively from the groups of second terminals, the second sub-channels having predetermined rates and each consisting in at least one block of resources having a predetermined position in the second area of the uplink frames,
a means for allocating first sub-channels as a priority to data to be transmitted respectively to the groups (G0, G1, G2) of second terminals, and
a means for allocating a second sub-channel reserved for a group as a priority to data to be received from one of the second terminals (MT_{G0}, MT_{G1}, MT_{G2}) of the group;
a means for allocating signalling fields (SGMC_{DL}, SGMC_{UL}) at the beginning of the second areas (ZMC_{DL}, ZMC_{DL}) of the downlink and uplink frames (TR_{DL}, TR_{UL}) to signalling downlinks and uplinks associated with the groups (G0, G1, G2) and to scheduling blocks of resources (BRG_{DL}, BRG_{UL}) of the downlink and uplink sub-channels respectively associated with the groups in the frames.

12. A broadband radio communication network (RR) comprising base stations and mobile terminals (MS), **characterised in that** each base station is in accordance with claim 11.

13. A computer program able to be implemented in a base station, said program being **characterised in that** it comprises instructions which, when the program is run in the base station, perform the method according to one of claims 1 to 9.
